# EUROPEAN PATENT APPLICATION

(11) **EP 4 831 552 A1**
(43) Date of publication of application: **28.10.2026**
(21) Application number: 24906996.4
(22) Date of filing: 12.11.2024
(51) Int. Cl.: F25B 1/00, F25B 5/04, F25B 41/30

(54) **EJECTOR, EJECTOR REFRIGERATION CYCLE, AND METHOD OF OPERATING NOZZLE DEVICE**

(30) Priority: 18.12.2023 JP 2023212957; 30.07.2024 JP 2024123251
(71) Applicant: DENSO CORPORATION, Kariya-city, Aichi 448-8661 (JP)
(72) Inventor: NISHIJIMA Haruyuki, Kariya- city, Aichi 4488661 (JP); OGATA Gota, Kariya- city, Aichi 4488661 (JP); OUCHI Riku, Kariya- city, Aichi 4488661 (JP); NISHIKAWA Michio, Kariya- city, Aichi 4488661 (JP); SUWA Yuji, Kariya- city, Aichi 4488661 (JP); YOKOYAMA Yoshiyuki, Kariya- city, Aichi 4488661 (JP); TANAKA Kota, Kariya- city, Aichi 4488661 (JP)
(74) Representative: TBK
(86) International application number: PCT/JP2024/040209
(87) International publication number: WO 2025/134608

(57) **Abstract**

An ejector comprises a nozzle portion (30, 301) and a body portion (40). the nozzle portion (30, 301) includes a nozzle inlet (32a) at which depressurization of a fluid is started, an ejection port (32e) from which the fluid is ejected, and a nozzle passage (32) extending from the nozzle inlet to the ejection port. The nozzle passage (32) includes a first passage (321) and a second passage (322). The first passage (321) reduces a passage cross-sectional area from the nozzle inlet (32a) toward a downstream side in a fluid flow direction. The second passage (322) expands a passage cross-sectional area from a first outlet (32b) of the first passage (321) toward the downstream side in the fluid flow direction. The first passage (321) generates a bubble in the fluid in a liquid phase, and the second passage (322) causes the fluid to reach a critical state.

## Description

### CROSS-REFERENCE TO RELATED APPLICATIONS

This application is based on and claims priority to Japanese Patent Application No. 2023-212957 filed on December 18, 2023, and Japanese Patent Application No. 2024-123251 filed on July 30, 2024, the entire contents of which are incorporated herein by reference.

### TECHNICAL FIELD

The present disclosure relates to an ejector exhibiting a fluid pressure boosting action, an ejector-type refrigeration cycle including the ejector, and a method for operating a nozzle device applicable to the ejector.

### BACKGROUND

Conventionally, Patent Literature 1 discloses an ejector-type refrigeration cycle including an ejector. In the ejector-type refrigeration cycle, a pressure of a suction refrigerant sucked into a compressor may be increased to be higher than a refrigerant evaporation pressure in an evaporator by a fluid pressure boosting action of the ejector. Thus, in the ejector-type refrigeration cycle, power consumption of the compressor may be reduced, and a coefficient of performance (COP) of the cycle may be improved.

In order to improve a pressure boosting capacity of the ejector, it is effective to improve a nozzle efficiency ηnoz in a nozzle portion of the ejector. The nozzle efficiency ηnoz is an energy conversion efficiency when a pressure energy of a fluid is converted into a velocity energy in a nozzle passage formed in the nozzle portion. The nozzle passage is a refrigerant passage extending from a nozzle inlet at which depressurization of the fluid is started in the nozzle portion to an ejection port from which the fluid is ejected. Therefore, in order to improve the nozzle efficiency ηnoz, it is effective to increase a velocity of an ejection refrigerant ejected from the ejection port.

Therefore, the ejector of Patent Literature 1 employs a two-stage expansion type nozzle portion configured to depressurize the refrigerant in two stages. More specifically, the nozzle portion of Patent Literature 1 includes a variable throttle as a first-stage nozzle and a fixed throttle as a second-stage nozzle.

In the ejector-type refrigeration cycle of Patent Literature 1, a subcooled liquid-phase refrigerant is caused to flow into an inlet of the nozzle portion to generate fine bubbles in the liquid-phase refrigerant in a vicinity of a wall surface of a throat portion of the first-stage nozzle. Furthermore, the liquid-phase refrigerant including the bubbles generated in the first-stage nozzle is caused to flow into the second-stage nozzle to further generate and grow the bubbles in the second-stage nozzle.

Thus, the ejector of Patent Literature 1 attempts to improve the nozzle efficiency ηnoz by increasing the velocity of the ejection refrigerant ejected from the ejection port of the nozzle portion.

### PRIOR ART LITERATURE

### PATENT LITERATURE

Patent Literature 1: JP 2008-111662 A

### SUMMARY

However, according to studies by the present inventors, in the ejector of Patent Literature 1, when a load fluctuation of the ejector-type refrigeration cycle occurs, an effect of improving the nozzle efficiency ηnoz due to employment of the two-stage expansion type nozzle portion may not be sufficiently obtained. Therefore, the present inventors investigated a cause of this and found that the cause is that the ejector of Patent Literature 1 employs the variable throttle as the first-stage nozzle.

More specifically, when the load fluctuation of the ejector-type refrigeration cycle device occurs, a flow rate of the refrigerant flowing into the nozzle portion of the ejector also fluctuates. Therefore, if the variable throttle is employed as the first-stage nozzle, it is possible to appropriately adjust the flow rate of the refrigerant flowing through the nozzle passage by adjusting a passage cross-sectional area of the throat portion of the first-stage nozzle according to the load fluctuation of the ejector-type refrigeration cycle device.

On the other hand, when the passage cross-sectional area of the throat portion of the first-stage nozzle is changed according to the load fluctuation of the ejector-type refrigeration cycle, a generation mode and a generation amount of the bubbles generated in the liquid-phase refrigerant in the vicinity of the wall surface of the throat portion of the first-stage nozzle fluctuate.

Therefore, in the ejector of Patent Literature 1, when the load fluctuation occurs in the ejector-type refrigeration cycle, the bubbles generated in the liquid-phase refrigerant in the nozzle passage may become insufficient, or the refrigerant in the nozzle passage may fall into a thermodynamic non-equilibrium state, so that the effect of improving the nozzle efficiency ηnoz may not be sufficiently obtained, and a sufficient fluid pressure boosting action may not be obtained.

Here, the thermodynamic non-equilibrium state is a state in which a temperature of particles of the liquid-phase refrigerant (hereinafter referred to as droplets) included in the refrigerant having fallen into a gas-liquid two-phase state is higher than a saturation temperature of the refrigerant at the same pressure. In addition, a thermodynamic equilibrium state is a state in which the temperature of the droplets included in the refrigerant in the gas-liquid two-phase state is equal to the saturation temperature of the refrigerant at the same pressure.

When the fluid in the ejector is in the thermodynamic non-equilibrium state, the velocity of the fluid in the ejector cannot be sufficiently accelerated, and the ejector cannot exhibit the sufficient fluid pressure boosting action.

In view of the above points, a first object of the present disclosure is to provide an ejector capable of exhibiting a high pressure boosting capacity regardless of a flow rate fluctuation of a fluid flowing into a nozzle portion.

A second object of the present disclosure is to provide an ejector-type refrigeration cycle capable of exhibiting a high coefficient of performance regardless of a load fluctuation.

A third object of the present disclosure is to provide a method for operating a nozzle device capable of improving a nozzle efficiency regardless of a flow rate fluctuation of an inflowing fluid.

An ejector according to a first aspect of the present disclosure comprises: a nozzle portion; and a body portion. The nozzle portion depressurizes and ejects a drive-side fluid. The body portion includes a suction port, a mixing portion, and a refrigerant outlet. The suction port is a portion that sucks a suction-side fluid. The mixing portion is a portion that mixes an ejection fluid ejected from the nozzle portion and a suction fluid sucked from the suction port. The refrigerant outlet is a portion that causes a mixed fluid mixed in the mixing portion to flow out.

The nozzle portion includes a nozzle inlet at which depressurization of a fluid is started, an ejection port from which the fluid is ejected, and a nozzle passage extending from the nozzle inlet to the ejection port. Furthermore, the nozzle passage includes a first passage and a second passage. The first passage is configured to reduce a passage cross-sectional area from the nozzle inlet toward a downstream side in a fluid flow direction. The second passage is configured to expand a passage cross-sectional area from a first outlet of the first passage toward the downstream side in the fluid flow direction.

The first passage is configured to generate a bubble in the fluid in a liquid phase in the first passage, and the second passage is configured to cause the fluid to reach a critical state in the second passage.

Here, the second passage is a fluid passage in a range from an inlet of the second passage to an outlet of the second passage. That is, the second passage is a fluid passage in a range from the first outlet corresponding to a so-called throat portion to a second outlet in an embodiment to be described later. Therefore, the second passage includes the first outlet and the second outlet. The passage cross-sectional area is an area of a cross section perpendicular to an axial direction.

According to this, in the first passage, the bubble is generated in the fluid in the liquid phase, and a mode of a flow of the fluid may be changed from a bubble flow to a mist flow. Furthermore, in the second passage, the fluid having become the mist flow reaches the critical state. Therefore, in the second passage, a velocity of the fluid having become the mist flow is brought close to a sound velocity, and a velocity of the ejection fluid may be increased. Thus, the nozzle efficiency ηnoz of the nozzle portion may be improved, and the pressure boosting capacity of the ejector may be improved.

Here, the bubble flow is a mode of the flow of the fluid in which bubbles exist in a subcooled liquid-phase fluid. In a depressurization process of the bubble flow, a bubble diameter expands and the bubbles grow. The mist flow is a mode of the flow of the fluid in which particles of the liquid-phase fluid (hereinafter referred to as droplets) exist in a saturated gas-phase fluid. In a depressurization process of the mist flow, a velocity is generated in the droplets pulled by an expanding saturated gas-phase refrigerant. In refrigerants having the same mass flow rate, the mist flow having a larger volume ratio of the gas-phase fluid has a higher velocity than the bubble flow.

In addition, in a compressible fluid, a product of a density and a velocity of a flow becomes maximum when the velocity of the flow reaches the sound velocity. Therefore, a state in which the product of the density and the velocity of the flow becomes maximum is referred to as the critical state. A flow rate of the fluid when the critical state is reached is referred to as a critical flow rate.

The critical flow rate changes according to a passage cross-sectional area of a portion where the fluid reaches the critical state in the second passage. Therefore, when a flow rate fluctuation occurs in the drive-side fluid, the flow rate of the fluid flowing through the nozzle passage may be adjusted by changing a position where the fluid reaches the critical state in the second passage. For this reason, it is not necessary to change the passage cross-sectional area of the first outlet in order to change the flow rate of the fluid flowing through the nozzle passage.

Therefore, even if the flow rate fluctuation of the fluid flowing into the nozzle passage occurs, the generation mode and the generation amount of the bubbles generated in the liquid-phase fluid in the vicinity of the wall surface of the first outlet are less likely to be affected. As a result, regardless of the flow rate fluctuation of the fluid flowing into the nozzle portion, sufficient bubbles may be generated in the fluid in the liquid phase, and a velocity of the ejection refrigerant may be increased.

That is, according to the ejector of the first aspect of the present disclosure, it is possible to provide an ejector capable of exhibiting a high pressure boosting capacity regardless of the flow rate fluctuation of the fluid flowing into the nozzle portion.

An ejector according to a second aspect of the present disclosure comprises: a nozzle portion; and a body portion. The nozzle portion depressurizes and ejects a drive-side fluid. The body portion includes a suction port, a mixing portion, and a refrigerant outlet. The suction port is a portion that sucks a suction-side fluid. The mixing portion is a portion that mixes an ejection fluid ejected from the nozzle portion and a suction fluid sucked from the suction port. The refrigerant outlet is a portion that causes a mixed fluid mixed in the mixing portion to flow out.

The nozzle portion includes a nozzle inlet at which depressurization of a fluid is started, an ejection port from which the fluid is ejected, and a nozzle passage extending from the nozzle inlet to the ejection port. Furthermore, the nozzle passage includes a first passage and a second passage. The first passage is configured to reduce a passage cross-sectional area from the nozzle inlet toward a downstream side in a fluid flow direction. The second passage is configured to expand a passage cross-sectional area from a first outlet of the first passage toward the downstream side in the fluid flow direction.

The first passage is configured to cause the fluid in a gas-liquid two-phase to be in a thermodynamic non-equilibrium state at the first outlet, and the second passage is configured to cause the fluid to reach a critical state in the second passage. The second passage or the mixing portion is configured to cause the fluid to be in a thermodynamic equilibrium state in the second passage or the mixing portion.

According to this, even if the refrigerant is in the thermodynamic non-equilibrium state in the first passage, it is in the thermodynamic equilibrium state in any one of the second passage and the mixing portion. Therefore, a pressure energy possessed by the drive-side fluid may be effectively converted into a kinetic energy in the ejector in any one of the second passage and the mixing portion.

Furthermore, when a flow rate fluctuation occurs in the drive-side fluid, a flow rate of the fluid flowing through the nozzle passage may be adjusted by changing a position where the fluid reaches the critical state in the second passage. For this reason, it is not necessary to change the passage cross-sectional area of the first outlet in order to change the flow rate of the fluid flowing through the nozzle passage.

That is, according to the ejector of the second aspect of the present disclosure, it is possible to provide an ejector capable of exhibiting a high pressure boosting capacity regardless of the flow rate fluctuation of the fluid flowing into the nozzle portion.

In the ejector, the drive-side fluid does not necessarily have to be a liquid-phase fluid, and may be any fluid that can become a bubble flow in the first passage. For example, it may be a fluid in a supercritical state in which a pressure of the fluid is equal to or higher than a pressure at a critical point and a temperature of the fluid is equal to or higher than a temperature at the critical point.

An ejector-type refrigeration cycle according to a third aspect of the present disclosure comprises: a compressor; a heat release portion; an evaporation portion; and an ejector. The compressor compresses and discharges a refrigerant. The heat release portion releases heat of the refrigerant discharged from the compressor. The evaporation portion evaporates the refrigerant.

The ejector includes a nozzle portion and a body portion. The nozzle portion depressurizes and ejects the refrigerant flowing out of the heat release portion. The body portion includes a suction port, a mixing portion, and a refrigerant outlet. The suction port is a portion that sucks the refrigerant flowing out of the evaporation portion. The mixing portion is a portion that mixes an ejection refrigerant ejected from the nozzle portion and a suction refrigerant sucked from the suction port. The refrigerant outlet is a portion that causes a mixed refrigerant mixed in the mixing portion to flow out to a suction port side of the compressor.

The nozzle portion includes a nozzle inlet at which depressurization of the refrigerant is started, an ejection port from which the refrigerant is ejected, and a nozzle passage extending from the nozzle inlet to the ejection port. The nozzle passage includes a first passage and a second passage. The first passage is configured to reduce a passage cross-sectional area from the nozzle inlet toward a downstream side in a refrigerant flow direction. The second passage is configured to expand a passage cross-sectional area from a first outlet of the first passage toward the downstream side in the refrigerant flow direction.

The first passage is configured to generate a bubble in the refrigerant in a liquid phase in the first passage, and the second passage is configured to cause the refrigerant to reach a critical state in the second passage.

According to this, since the ejector according to the first aspect of the present disclosure is provided, the ejector may be caused to exhibit a high pressure boosting capacity regardless of the flow rate fluctuation of the refrigerant flowing into the nozzle portion. That is, according to the ejector-type refrigeration cycle of the third aspect of the present disclosure, it is possible to provide an ejector-type refrigeration cycle capable of exhibiting a high coefficient of performance regardless of a load fluctuation.

An ejector-type refrigeration cycle according to a fourth aspect of the present disclosure comprises: a compressor; a heat release portion; an evaporation portion; and an ejector. The compressor compresses and discharges a refrigerant. The heat release portion releases heat of the refrigerant discharged from the compressor. The evaporation portion evaporates the refrigerant.

The ejector includes a nozzle portion and a body portion. The nozzle portion depressurizes and ejects the refrigerant flowing out of the heat release portion. The body portion includes a suction port, a mixing portion, and a refrigerant outlet. The suction port is a portion that sucks the refrigerant flowing out of the evaporation portion. The mixing portion is a portion that mixes an ejection refrigerant ejected from the nozzle portion and a suction refrigerant sucked from the suction port. The refrigerant outlet is a portion that causes a mixed refrigerant mixed in the mixing portion to flow out to a suction port side of the compressor.

The nozzle portion includes a nozzle inlet at which depressurization of the refrigerant is started, an ejection port from which the refrigerant is ejected, and a nozzle passage extending from the nozzle inlet to the ejection port. The nozzle passage includes a first passage and a second passage. The first passage is configured to reduce a passage cross-sectional area from the nozzle inlet toward a downstream side in a refrigerant flow direction. The second passage is configured to expand a passage cross-sectional area from a first outlet of the first passage toward the downstream side in the refrigerant flow direction.

The first passage is configured to cause the refrigerant in a gas-liquid two-phase to be in a thermodynamic non-equilibrium state at the first outlet. The second passage is configured to cause the refrigerant to reach a critical state in the second passage. The second passage or the mixing portion is configured to cause the refrigerant to be in a thermodynamic equilibrium state in the second passage or the mixing portion.

According to this, since the ejector according to the second aspect of the present disclosure is provided, the ejector may be caused to exhibit a high pressure boosting capacity regardless of the flow rate fluctuation of the fluid flowing into the nozzle portion. That is, according to the ejector-type refrigeration cycle of the fourth aspect of the present disclosure, it is possible to provide an ejector-type refrigeration cycle capable of exhibiting a high coefficient of performance regardless of a load fluctuation.

In the ejector-type refrigeration cycle, the refrigerant flowing out of the heat release portion does not necessarily have to be a liquid-phase refrigerant, and may be any refrigerant that can become a bubble flow in the first passage. For example, it may be a refrigerant in a supercritical state.

A method for operating a nozzle device according to a fifth aspect of the present disclosure is a method for operating a nozzle device including a nozzle portion configured to depressurize a fluid.

The nozzle portion includes a nozzle inlet at which depressurization of the fluid is started, an ejection port from which the fluid is ejected, and a nozzle passage extending from the nozzle inlet to the ejection port. The nozzle passage includes a first passage and a second passage. The first passage is configured to reduce a passage cross-sectional area from the nozzle inlet toward a downstream side in a fluid flow direction. The second passage is configured to expand a passage cross-sectional area from a first outlet of the first passage toward the downstream side in the fluid flow direction.

A bubble is generated in the fluid in a liquid phase in the first passage, the fluid is brought to a critical state in the second passage, and further, a position where the fluid becomes the critical state in the second passage is changed by adjusting a velocity of the fluid flowing into the nozzle inlet.

According to this, in the first passage, a bubble is generated in the fluid in the liquid phase, and a mode of a flow of the fluid may be changed from a bubble flow to a mist flow. Furthermore, in the second passage, the fluid having become the mist flow is brought to the critical state. Therefore, in the second passage, a velocity of the fluid having become the mist flow is brought close to a sound velocity, and a velocity of the ejection fluid may be increased. As a result, the nozzle efficiency ηnoz may be improved.

Furthermore, since the position where the fluid becomes the critical state in the second passage is changed by adjusting the velocity of the fluid flowing into the nozzle inlet, a critical flow rate may be changed according to a passage cross-sectional area at the position where the fluid becomes the critical state. That is, it is not necessary to change the passage cross-sectional area of the first outlet in order to change a flow rate of the fluid flowing through the nozzle passage.

Therefore, even if a flow rate fluctuation of the fluid flowing into the nozzle portion occurs, the generation mode and the generation amount of the bubbles generated in the liquid-phase fluid in the vicinity of the wall surface of the first outlet are less likely to be affected. As a result, regardless of the flow rate fluctuation of the inflowing fluid, sufficient bubbles may be generated in the fluid in the liquid phase, and a velocity of the ejection fluid may be increased.

That is, according to the method for operating the nozzle device of the fifth aspect of the present disclosure, it is possible to provide a method for operating a nozzle device capable of improving the nozzle efficiency ηnoz regardless of the flow rate fluctuation of the inflowing fluid.

A method for operating a nozzle device according to a sixth aspect of the present disclosure is a method for operating a nozzle device including a nozzle portion configured to depressurize a fluid.

The nozzle portion includes a nozzle inlet at which depressurization of the fluid is started, an ejection port from which the fluid is ejected, and a nozzle passage extending from the nozzle inlet to the ejection port. The nozzle passage includes a first passage and a second passage. The first passage is configured to reduce a passage cross-sectional area from the nozzle inlet toward a downstream side in a fluid flow direction. The second passage is configured to expand a passage cross-sectional area from a first outlet of the first passage toward the downstream side in the fluid flow direction.

The fluid in a gas-liquid two-phase in a thermodynamic non-equilibrium state in the first passage is brought to a critical state and to a thermodynamic equilibrium state in the second passage, and further, a position where the fluid becomes the thermodynamic equilibrium state in the second passage is changed by adjusting a velocity of the fluid flowing into the nozzle inlet.

According to this, even if the fluid flowing out of the first outlet is in the thermodynamic non-equilibrium state, the fluid is brought to the critical state and to the thermodynamic equilibrium state in the second passage. Therefore, at an outlet of the second passage, a pressure energy possessed by the fluid flowing into the nozzle inlet may be effectively converted into a velocity energy, and a velocity of the ejection fluid may be increased. As a result, the nozzle efficiency ηnoz may be improved.

Furthermore, since the position where the fluid becomes the thermodynamic equilibrium state in the second passage is changed by adjusting the velocity of the fluid flowing into the nozzle inlet, a velocity and a density for bringing the fluid to the critical state are changed, and a critical flow rate of the fluid may be changed. That is, it is not necessary to change the passage cross-sectional area of the first outlet in order to change a flow rate of the fluid flowing through the nozzle passage.

Therefore, even if a flow rate fluctuation of the fluid flowing into the nozzle portion occurs, the generation mode and the generation amount of the bubbles generated in the liquid-phase fluid in the vicinity of the wall surface of the first outlet are less likely to be affected. As a result, regardless of the flow rate fluctuation of the inflowing fluid, sufficient bubbles may be generated in the fluid in the liquid phase, and a velocity of the ejection fluid may be increased.

That is, according to the method for operating the nozzle device of the sixth aspect of the present disclosure, it is possible to provide a method for operating a nozzle device capable of improving the nozzle efficiency ηnoz regardless of the flow rate fluctuation of the inflowing fluid.

In the method for operating the nozzle device, the fluid flowing into the nozzle portion does not necessarily have to be a liquid-phase fluid, and may be any refrigerant that can become a bubble flow in the first passage. For example, it may be a fluid in a supercritical state.

### BRIEF DESCRIPTION OF DRAWINGS

The above objects and other objects, features, and advantages of the present disclosure will become more apparent from the following detailed description with reference to the accompanying drawings.
FIG. 1 is a schematic overall configuration diagram of a vehicular refrigeration cycle device of a first embodiment.
FIG. 2 is an axial cross-sectional view of an ejector of the first embodiment.
FIG. 3 is an enlarged axial cross-sectional view when a passage area of a nozzle inlet of a nozzle portion of the first embodiment is expanded.
FIG. 4 is an axial cross-sectional view when the passage area of the nozzle inlet of the nozzle portion of the first embodiment is reduced.
FIG. 5 is an enlarged axial cross-sectional view when a nozzle passage of the nozzle portion of the first embodiment is closed.
FIG. 6 is a graph showing a momentum-frozen phase-change equilibrium sound velocity and a momentum-equilibrium phase-change equilibrium sound velocity with respect to a degree of dryness.
FIG. 7 is a Mollier diagram showing a change in a state of a refrigerant in an ejector-type refrigeration cycle of the first embodiment.
FIG. 8 is a schematic overall configuration diagram of a vehicular refrigeration cycle device of a second embodiment.
FIG. 9 is an axial cross-sectional view of an ejector of the second embodiment.
FIG. 10 is a Mollier diagram showing a change in a state of a refrigerant during a normal operation of an ejector-type refrigeration cycle of the second embodiment.
FIG. 11 is a Mollier diagram showing a change in a state of a refrigerant during a high load operation of the ejector-type refrigeration cycle of the second embodiment.
FIG. 12 is a schematic overall configuration diagram of a vehicular refrigeration cycle device of a third embodiment.
FIG. 13 is a schematic overall configuration diagram of a vehicular refrigeration cycle device of a fourth embodiment.
FIG. 14 is a schematic overall configuration diagram of a vehicular refrigeration cycle device of a fifth embodiment.
FIG. 15 is a Mollier diagram showing a change in a state of a refrigerant during a normal operation of an ejector-type refrigeration cycle of the fifth embodiment.
FIG. 16 is a Mollier diagram showing a change in a state of a refrigerant during a high load operation of the ejector-type refrigeration cycle of the fifth embodiment.
FIG. 17 is a schematic overall configuration diagram of a vehicular refrigeration cycle device of a sixth embodiment.

### DESCRIPTION OF EMBODIMENTS

Multiple embodiments for carrying out the present disclosure will be described below with reference to the drawings. In each embodiment, parts corresponding to the matters described in a preceding embodiment may be denoted by the same reference numerals, and overlapping description may be omitted. When only a part of a configuration is described in each embodiment, other preceding embodiments may be applied to other parts of the configuration. Not only a combination of parts explicitly stating that the combination is possible in each embodiment, but also a partial combination of the embodiments without explicit statement is possible unless a particular problem occurs in the combination.

### (First Embodiment)

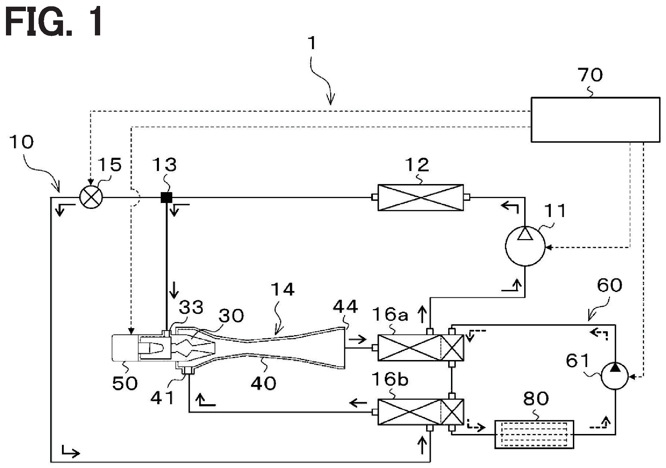

A first embodiment of the present disclosure will be described with reference to FIGS. 1 to 7. In the present embodiment, an ejector-type refrigeration cycle including an ejector according to the present disclosure is applied to a vehicular refrigeration cycle device 1 mounted on an electric vehicle. The electric vehicle is a vehicle obtaining a driving force for traveling from a traveling electric motor. The vehicular refrigeration cycle device 1 of the present embodiment cools an in-vehicle device mounted on the vehicle and generating heat during an operation.

In the vehicular refrigeration cycle device 1, a battery 80 is cooled as the in-vehicle device. The battery 80 is a secondary battery storing electric power supplied to multiple in-vehicle devices operating by electricity. The battery 80 is an assembled battery formed by electrically connecting multiple battery cells arranged in a stacked manner in series or in parallel. The battery cells of the present embodiment are lithium-ion batteries.

The battery 80 generates heat during an operation (that is, during charging and discharging). An output of the battery 80 tends to decrease when a temperature becomes low, and deterioration tends to proceed when the temperature becomes high. Therefore, the temperature of the battery 80 needs to be maintained within an appropriate temperature range (15 degrees Celsius or more and 55 degrees Celsius or less in the present embodiment). Therefore, in the electric vehicle of the present embodiment, the battery 80 is cooled using the vehicular refrigeration cycle device 1.

The vehicular refrigeration cycle device 1 includes an ejector-type refrigeration cycle 10, a cooling water circuit 60, a control device 70, and the like.

First, the ejector-type refrigeration cycle 10 will be described with reference to the overall configuration diagram of FIG. 1. The ejector-type refrigeration cycle 10 is a vapor compression type refrigeration cycle cooling cooling water circulating through the cooling water circuit 60. In the ejector-type refrigeration cycle 10, an HFO-based refrigerant (specifically, R1234yf) is employed as a refrigerant. The ejector-type refrigeration cycle 10 constitutes a subcritical refrigeration cycle in which a pressure of a high-pressure side refrigerant does not exceed a critical pressure of the refrigerant.

A refrigeration machine oil for lubricating a compressor 11 is mixed in the refrigerant. The refrigeration machine oil is a PAG oil (that is, polyalkylene glycol oil) having compatibility with a liquid-phase refrigerant, or POE (that is, polyol ester). A part of the refrigeration machine oil circulates through the ejector-type refrigeration cycle 10 together with the refrigerant.

The compressor 11 sucks the refrigerant, compresses it, and discharges it in the ejector-type refrigeration cycle 10. The compressor 11 is an electric compressor rotationally driving a fixed displacement type compression mechanism having a fixed discharge capacity with an electric motor. A rotation speed (that is, a refrigerant discharge capacity) of the compressor 11 is controlled by a control signal output from the control device 70 to be described later.

A refrigerant inlet side of an outdoor heat exchanger 12 is connected to a discharge port of the compressor 11. The outdoor heat exchanger 12 is a heat release portion configured to exchange heat between the refrigerant discharged from the compressor 11 and an outside air blown from an unillustrated outside air fan to release heat of the refrigerant and condense the refrigerant.

An inflow port side of a branch portion 13 is connected to a refrigerant outlet of the outdoor heat exchanger 12. The branch portion 13 branches a flow of the refrigerant flowing out of the outdoor heat exchanger 12. The branch portion 13 is a three-way joint having three inflow and outflow ports communicating with each other. As the branch portion 13, a joint portion formed by joining multiple pipes or a joint portion formed by providing multiple refrigerant passages in a metal block or a resin block may be employed.

A refrigerant inlet 33 side of an ejector 14 is connected to one outflow port of the branch portion 13. An inlet side of an electric expansion valve 15 is connected to another outflow port of the branch portion 13.

The ejector 14 is a fluid transport portion configured to suck a refrigerant from a suction port 41 formed in a body portion 40 by an action of an ejection refrigerant ejected from a nozzle portion 30 and transport the refrigerant to a refrigerant outlet 44 side. Furthermore, the ejector 14 is a fluid pressure boosting portion configured to increase a pressure of a mixed refrigerant obtained by mixing the ejection refrigerant and the suction refrigerant sucked from the suction port 41. A detailed configuration of the ejector 14 will be described later.

An inlet side of a refrigerant passage of a first chiller 16a is connected to the refrigerant outlet 44 of the ejector 14. The first chiller 16a is a heat exchanger configured to exchange heat between the refrigerant and the cooling water circulating through the cooling water circuit 60. The first chiller 16a is a heat exchanger for evaporation configured to cause the refrigerant flowing out of the ejector 14 to absorb heat possessed by cooling water pumped from a cooling water pump 61 to be described later and evaporate the refrigerant. Thus, the cooling water is cooled in the first chiller 16a. A suction port side of the compressor 11 is connected to an outlet of the refrigerant passage of the first chiller 16a.

The electric expansion valve 15 is an electric variable throttle mechanism configured to throttle a refrigerant passage and depressurize the refrigerant. The electric expansion valve 15 has a valve element portion and a drive portion. The valve element portion changes a throttle opening degree of the electric expansion valve 15. The drive portion displaces a valve element. As the drive portion, an electric actuator such as a stepping motor or a brushless DC motor may be employed. An operation of the electric expansion valve 15 is controlled by a control signal output from the control device 70.

An inlet side of a refrigerant passage of a second chiller 16b is connected to an outlet of the electric expansion valve 15. The second chiller 16b is a heat exchanger configured to exchange heat between the refrigerant and the cooling water circulating through the cooling water circuit 60. The second chiller 16b is an evaporation portion configured to cause the refrigerant flowing out of the electric expansion valve 15 to absorb heat possessed by the cooling water flowing out of a cooling water passage of the first chiller 16a and evaporate the refrigerant. Thus, the cooling water is cooled in the second chiller 16b. The suction port 41 side of the ejector 14 is connected to an outlet of the refrigerant passage of the second chiller 16b.

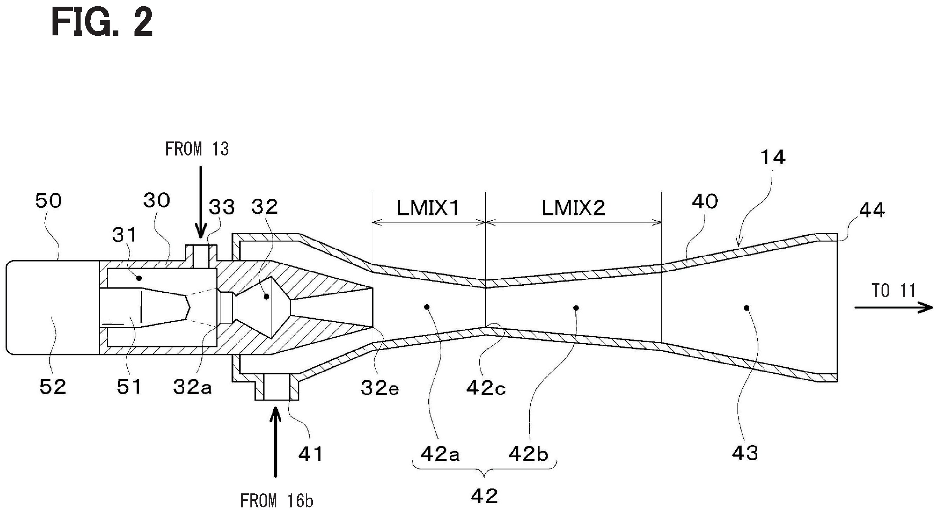

Next, a detailed configuration of the ejector 14 will be described with reference to FIGS. 2 to 6. The ejector 14 of the present embodiment transports and boosts a pressure of a refrigerant as a fluid. Therefore, in the present embodiment, the term "fluid" is replaced with the term "refrigerant". For example, an ejection fluid is referred to as an ejection refrigerant. A suction fluid is referred to as a suction refrigerant. A mixed fluid is referred to as a mixed refrigerant. The same applies to other parts as appropriate.

The ejector 14 has the nozzle portion 30, the body portion 40, and an initial velocity adjustment valve 50. The nozzle portion 30 depressurizes the refrigerant flowing out of the outdoor heat exchanger 12, accelerates it until it reaches a supersonic velocity, and ejects it. The nozzle portion 30 is formed by performing plastic working or cutting processing on a metal (stainless steel in the present embodiment) tapered cylindrical member. The nozzle portion 30 constitutes a nozzle device together with the initial velocity adjustment valve 50.

As shown in FIG. 2, an initial velocity adjustment space 31 and a nozzle passage 32 are formed inside the nozzle portion 30. Further, the refrigerant inlet 33 causing a subcooled liquid-phase refrigerant flowing out of the outdoor heat exchanger 12 to flow into the initial velocity adjustment space 31 is formed on a cylindrical outer wall surface of the nozzle portion 30. The refrigerant inlet 33 causes the refrigerant to flow in a direction perpendicular to an axial direction of the nozzle passage 32.

The initial velocity adjustment space 31 is a space for converting a velocity energy possessed by the subcooled liquid-phase refrigerant flowing inward from the refrigerant inlet 33 into a pressure energy. Specifically, in the initial velocity adjustment space 31, the velocity energy of the subcooled liquid-phase refrigerant is converted into the pressure energy by making a passage area of a refrigerant passage through which the subcooled liquid-phase refrigerant flows larger than a passage cross-sectional area of the refrigerant inlet 33.

The nozzle passage 32 is a refrigerant passage extending from a nozzle inlet 32a to an ejection port 32e. The nozzle inlet 32a is a portion where depressurization of the refrigerant is started. The ejection port 32e is a portion ejecting the refrigerant having passed through the nozzle passage 32 to a mixing portion 42 formed in the body portion 40. The nozzle passage 32 is formed in a shape of a rotating body.

A valve element portion 51 of the initial velocity adjustment valve 50 is disposed in the initial velocity adjustment space 31. The initial velocity adjustment valve 50 is a velocity adjustment portion configured to adjust an initial velocity (more specifically, a velocity in the axial direction) of the refrigerant flowing into the nozzle passage 32 from the nozzle inlet 32a. The initial velocity adjustment valve 50 is fixed to one end side of the nozzle portion 30 in the axial direction by means such as screw fastening. The initial velocity adjustment valve 50 has the valve element portion 51 and a drive portion 52.

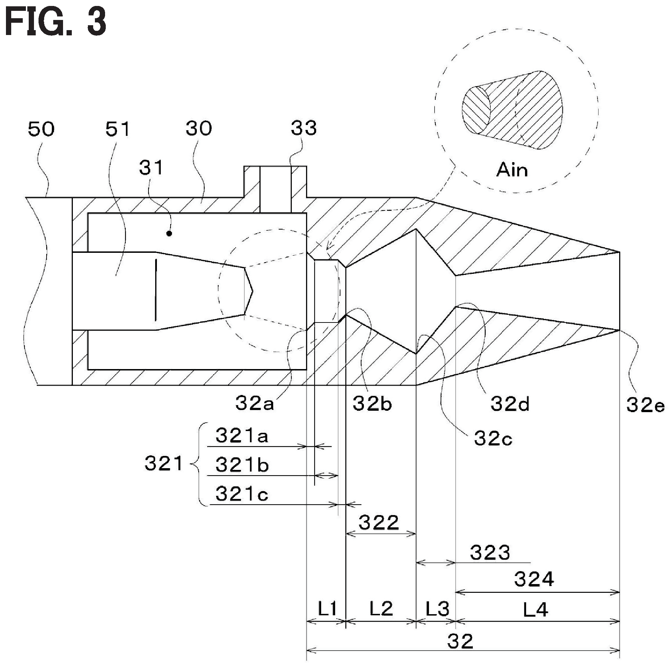

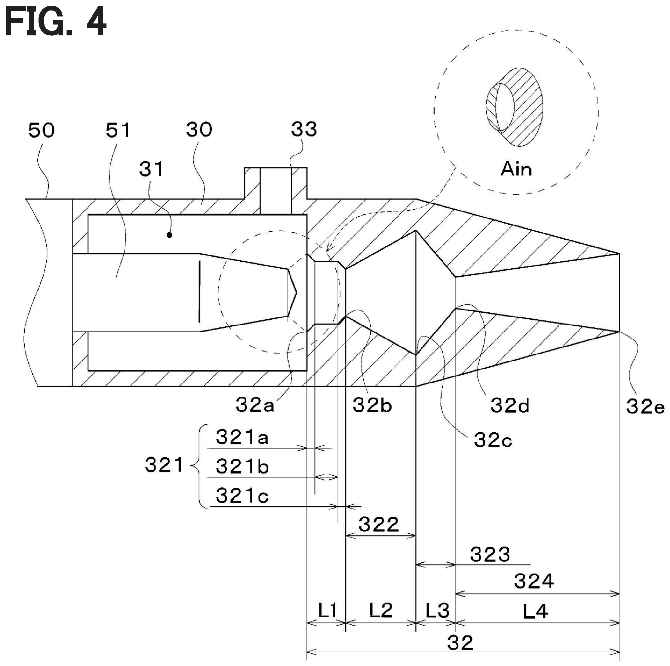

The valve element portion 51 is formed of a metal (stainless steel in the present embodiment) cylindrical member. The valve element portion 51 has a conical tip portion tapering toward the nozzle passage 32 side. The valve element portion 51 is arranged coaxially with the nozzle passage 32. Therefore, during an operation of the vehicular refrigeration cycle device 1, an inlet shape of the nozzle inlet 32a in the nozzle passage 32 becomes a side surface shape of a truncated cone as shown in FIGS. 3 and 4, and an inlet area becomes Ain.

The drive portion 52 is an electric actuator displacing the valve element portion 51 in the axial direction. Specifically, a stepping motor, a brushless DC motor, or the like may be employed as the drive portion 52. An operation of the initial velocity adjustment valve 50 is controlled by a control signal output from the control device 70.

Therefore, as shown in FIG. 3, when the drive portion 52 displaces the tip portion of the valve element portion 51 to a side away from the nozzle passage 32, the inlet area Ain of the nozzle inlet 32a expands. Therefore, an amount of conversion of the velocity energy of the refrigerant into the pressure energy in the initial velocity adjustment space 31 increases, and the initial velocity of the refrigerant flowing into the nozzle inlet 32a may be decreased.

Further, as shown in FIG. 4, when the drive portion 52 displaces the tip portion of the valve element portion 51 to a side approaching the nozzle passage 32, the inlet area Ain of the nozzle inlet 32a is reduced. The amount of conversion of the velocity energy of the refrigerant into the pressure energy in the initial velocity adjustment space 31 decreases, and the initial velocity of the refrigerant flowing into the nozzle inlet 32a may be increased.

Therefore, the initial velocity adjustment valve 50 changes the inlet area Ain of the nozzle inlet 32a without changing a passage cross-sectional area in the nozzle passage 32 from the nozzle inlet 32a to the ejection port 32e during the operation of the vehicular refrigeration cycle device 1. Thus, the velocity in the axial direction of the refrigerant flowing into the nozzle inlet 32a may be adjusted.

In other words, the initial velocity adjustment valve 50 can adjust the velocity in the axial direction of the refrigerant flowing into the nozzle inlet 32a by changing only the inlet area Ain of the nozzle inlet 32a during the operation of the vehicular refrigeration cycle device 1.

In the present embodiment, dimensional specifications of the initial velocity adjustment space 31 and a displacement amount of the valve element portion 51 are set such that the initial velocity of the refrigerant flowing into the nozzle inlet 32a approaches approximately 0 m/s when the inlet area Ain of the nozzle inlet 32a reaches a maximum value. Even if the initial velocity of the refrigerant flowing into the nozzle inlet 32a is 0 m/s, the refrigerant flows through the nozzle passage 32 as long as a pressure difference occurs between a pressure of the refrigerant in the initial velocity adjustment space 31 and a pressure of the refrigerant in the mixing portion 42.

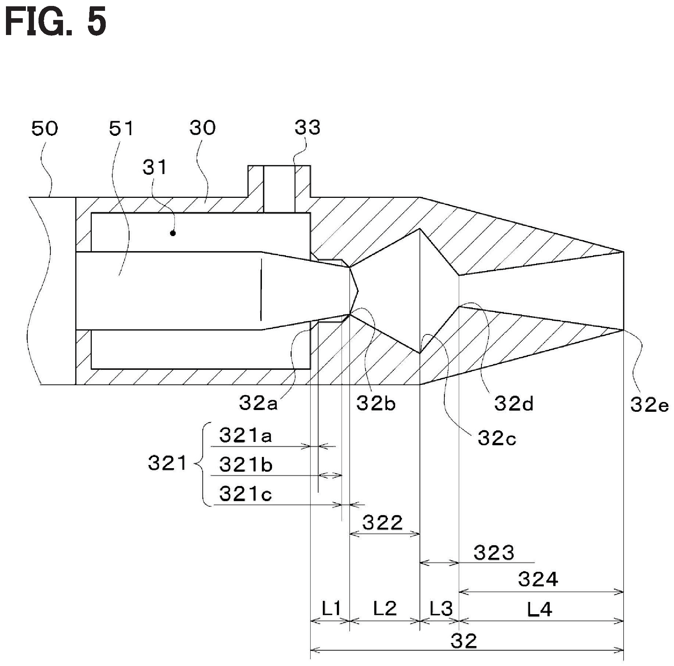

Furthermore, the initial velocity adjustment valve 50 of the present embodiment can also close the nozzle passage 32 by causing the drive portion 52 to bring the tip portion of the valve element portion 51 into contact with a passage wall surface of the nozzle passage 32 when the vehicular refrigeration cycle device 1 is stopped, as shown in FIG. 5.

As shown in FIGS. 3 to 5, refrigerant passages such as a first passage 321, a second passage 322, a third passage 323, and a fourth passage 324 are formed in the nozzle passage 32 of the present embodiment.

The first passage 321 is formed in a shape that reduces a passage cross-sectional area stepwise from the nozzle inlet 32a toward a downstream side of a refrigerant flow. The first passage 321 is a passage configured to generate fine bubbles in the subcooled liquid-phase refrigerant flowing into the nozzle passage 32 to change a mode of a flow of the refrigerant from a bubble flow to a mist flow. Therefore, the first passage 321 is a bubbling portion.

An inlet-side area reducing portion 321a, a constant area portion 321b, and an outlet-side area reducing portion 321c are formed in the first passage 321.

The inlet-side area reducing portion 321a is a portion reducing a passage cross-sectional area from the nozzle inlet 32a toward the downstream side in the refrigerant flow direction. In the inlet-side area reducing portion 321a, the passage cross-sectional area is reduced such that a temperature of the refrigerant flowing into the inlet-side area reducing portion 321a approaches a saturation temperature in order to efficiently foam the subcooled liquid-phase refrigerant flowing into the nozzle passage 32 in the constant area portion 321b.

The constant area portion 321b is a portion in which a passage cross-sectional area is constant from an outlet of the inlet-side area reducing portion 321a toward the downstream side in the refrigerant flow direction. In the constant area portion 321b, bubbles are generated in the liquid-phase refrigerant by nucleate boiling. Furthermore, the mode of the flow of the refrigerant is changed from a bubble flow to a mist flow. In other words, a phase change of the mode of the flow of the refrigerant from the bubble flow to the mist flow is performed.

More specifically, in the constant area portion 321b, nucleate boiling occurs at nano-level fine concavo-convex portions on a passage wall surface. Initial bubbles generated by the nucleate boiling detach from the passage wall surface to become bubbles. The bubbles grow and expand their diameter while advancing in a flow direction. When the diameter of the bubbles reaches or exceeds a critical diameter that can be maintained by a surface tension determined by physical properties of the refrigerant, bubble collapse occurs. Then, the liquid-phase refrigerant around the bubbles is sheared by a bubble collapse energy generated during the bubble collapse to generate droplets.

Thus, in the constant area portion 321b, the mode of the flow of the refrigerant is changed from the bubble flow to the mist flow.

The outlet-side area reducing portion 321c is a portion reducing a passage cross-sectional area from an outlet of the constant area portion 321b toward the downstream side in the refrigerant flow direction. In the outlet-side area reducing portion 321c, the passage cross-sectional area is reduced such that a temperature of a gas-phase refrigerant and a temperature of the droplets are brought into an equilibrium state (hereinafter referred to as a temperature equilibrium state).

The second passage 322 is formed in a shape that expands a passage cross-sectional area from a first outlet 32b of the first passage 321 toward the downstream side in the refrigerant flow direction. The second passage 322 is a passage configured to cause the refrigerant having become the mist flow in the first passage 321 to reach a critical state. In other words, the second passage 322 is a passage configured to bring the refrigerant of the mist flow generated in the first passage 321 to a critical state. The second passage 322 is a critical pressure generation portion.

Although the refrigerant of the mist flow flowing from the first outlet 32b of the first passage 321 into the second passage 322 is in the temperature equilibrium state, a velocity in the axial direction of the gas-phase refrigerant and a velocity in the axial direction of the droplets are in a non-equilibrium state (hereinafter referred to as a velocity non-equilibrium state). Furthermore, in the refrigerant flowing from the first outlet 32b into the second passage 322, the droplets having an inertial force advance on a central axis side, and the gas-phase refrigerant advances on a passage wall surface side while expanding a volume.

For this reason, a degree of velocity non-equilibrium between the gas-phase refrigerant and the droplets in the second passage 322 becomes greater than a degree at the first outlet 32b. The refrigerant of the mist flow in the velocity non-equilibrium state falls into the critical state when its velocity matches a momentum-frozen phase-change equilibrium sound velocity a_{fe}. Therefore, in the second passage 322, the passage cross-sectional area is expanded such that a mass average velocity uₜₕ₂ of the refrigerant having reached the critical state approaches the momentum-frozen phase-change equilibrium sound velocity a_{fe}.

The mass average velocity uₜₕ₂ is expressed by a following Math. F1. The momentum-frozen phase-change equilibrium sound velocity a_{fe} is expressed by following Math. F2 and F3.
[Math. 1] ${u}_{th 2} = {u}_{in} - \frac{1}{{G}_{c}} \left\{{\left[Ap\right]}_{in}^{th}-{\int }_{in}^{th} \left(p\frac{dA}{dx}+F\right) dx\right\}$ (F1)

The subscript in in Math. F1 indicates a state of the refrigerant at an inlet of the second passage 322 (that is, the first outlet 32b), and the subscript th indicates a state of the refrigerant having reached the critical state. Therefore, a mass average velocity uᵢₙ is a mass average velocity of the refrigerant at the first outlet 32b. A is a passage cross-sectional area. x indicates an axial distance. F indicates a friction loss of a two-phase flow on a passage wall surface.
[Math. 2] ${a}_{fe} = \frac{{xv}_{G} {v}_{G} + \left(1-x\right) {v}_{L} {v}_{L}}{{\left({xv}_{G}+\left(1-x\right){v}_{L}\right)}^{2}} ⋅ {a}_{ee}$ (F2)
[Math. 3] ${a}_{ee} = \sqrt{- {v}^{2} \frac{\frac{{S}_{G} - {S}_{L}}{{v}_{G} - {v}_{L}}}{- \frac{{v}_{G} - {v}_{L}}{{S}_{G} - {S}_{L}} \left(x\frac{{dS}_{G}}{dT}+\left(1-x\right)\frac{{dS}_{L}}{dT}\right) + x \frac{{dv}_{G}}{dT} + \left(1-x\right) \frac{{dv}_{L}}{dT}}}$ (F3)

v_{G} is a specific volume of a gas-phase refrigerant. v_{L} is a specific volume of a liquid-phase refrigerant. v is an average specific volume of a gas-liquid two-phase refrigerant. S_{G} is a specific entropy of the gas-phase refrigerant. S_{L} is a specific entropy of the liquid-phase refrigerant. T is a temperature of the refrigerant. aₑₑ is a momentum-equilibrium phase-change equilibrium sound velocity.

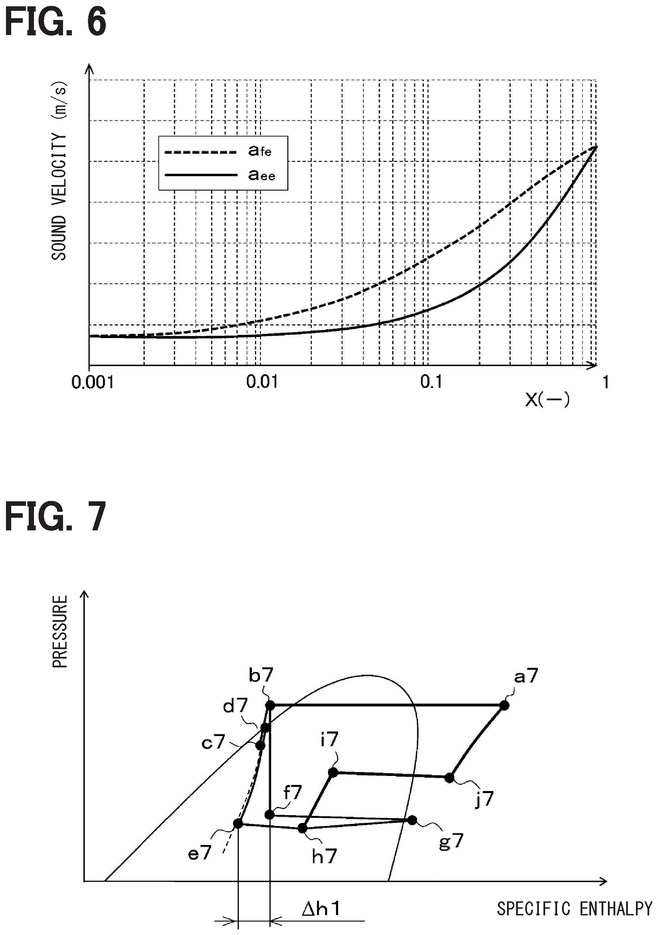

Here, FIG. 6 shows a relationship between a momentum-frozen phase-change equilibrium sound velocity a_{fe} and a momentum-equilibrium phase-change equilibrium sound velocity aₑₑ with respect to a degree of dryness X. FIG. 6 shows a relationship between a sound velocity with respect to the degree of dryness X when the refrigerant R1234yf is at 50 degrees Celsius. As shown in FIG. 6, regardless of the degree of dryness X, the momentum-frozen phase-change equilibrium sound velocity a_{fe} is faster than the momentum-equilibrium phase-change equilibrium sound velocity aₑₑ.

In a depressurization expansion process of the subcooled liquid-phase refrigerant, it takes time to grow bubbles generated by nucleate boiling. For this reason, a so-called pressure undershoot phenomenon occurs in which bubbles are not immediately generated in the subcooled liquid-phase refrigerant even if a pressure is reduced. When the pressure energy of the subcooled liquid-phase refrigerant is converted into the velocity energy by the pressure undershoot phenomenon, the mass average velocity uₜₕ₂ becomes a relatively fast value.

Therefore, the refrigerant of the mist flow in the velocity non-equilibrium state approaches the critical state by causing its velocity to match the momentum-frozen phase-change equilibrium sound velocity a_{fe}. Furthermore, downstream in the refrigerant flow from a position where the refrigerant reaches the critical state in the second passage 322, the gas-phase refrigerant expands its volume toward the passage wall surface side, so that the refrigerant on the passage wall surface side has a higher void fraction which is a volume ratio of a gas phase than the refrigerant on the central axis side. As a result, the refrigerant having a high void fraction on the passage wall surface side becomes subsonic again.

The first outlet 32b serves as a first-stage throat portion in which a passage cross-sectional area is most reduced among refrigerant passages formed by the first passage 321 and the second passage 322. For this reason, the refrigerant passage formed by the first passage 321 and the second passage 322 corresponds to a first-stage nozzle in a two-stage expansion type nozzle portion.

According to studies by the present inventors, it has been confirmed that, in the first passage 321 and the second passage 322, by setting an absolute value of an area change rate of the second passage 322 to be larger than an absolute value of an area change rate of the first passage 321, the refrigerant of the mist flow can easily be brought to the critical state in the second passage 322. That is, it has been confirmed that, by setting the absolute value of the area change rate of the second passage 322 to be larger than the absolute value of the area change rate of the first passage 321, the mass average velocity uₜₕ₂ of the refrigerant having reached the critical state can be easily brought close to the momentum-frozen phase-change equilibrium sound velocity a_{fe}.

The absolute value of the area change rate of the first passage 321 is an absolute value of a value obtained by dividing a difference between a passage cross-sectional area at the nozzle inlet 32a and a passage cross-sectional area at the first outlet 32b by an axial length L1 of the first passage 321. The passage cross-sectional area is an area of a cross section perpendicular to the axial direction. A starting point of the axial length L1 may be a center point of an opening circle forming the nozzle inlet 32a in the nozzle portion 30, and an ending point may be a center point of a cross section perpendicular to an axial direction of a refrigerant passage formed by the first outlet 32b.

The absolute value of the area change rate of the second passage 322 is an absolute value of a value obtained by dividing a difference between a passage cross-sectional area at an inlet of the second passage 322 (that is, the first outlet 32b) and a passage cross-sectional area at a second outlet 32c by an axial length L2 of the second passage 322. A starting point of the axial length L2 may be a center point of a cross section perpendicular to an axial direction of a refrigerant passage formed by the first outlet 32b, and an ending point may be a center point of a cross section perpendicular to an axial direction of a refrigerant passage formed by the second outlet 32c.

Furthermore, for the first passage 321, it has been confirmed that if the passage cross-sectional area at the first outlet 32b is set to about 90% with respect to a maximum passage cross-sectional area perpendicular to an axial direction at the nozzle inlet 32a, a mist flow can be generated well.

The third passage 323 is formed in a shape that reduces a passage cross-sectional area from the second outlet 32c of the second passage 322 toward the downstream side in the refrigerant flow direction. The third passage 323 is a passage configured to miniaturize droplets included in the refrigerant of the mist flow flowing out of the second passage 322 and bring the refrigerant to a critical state again at a third outlet 32d of the third passage 323. Therefore, the third passage 323 is a droplet miniaturization portion.

As described above, since the refrigerant of the mist flow flowing out of the second outlet 32c of the second passage 322 is in the velocity non-equilibrium state, droplets are likely to be unevenly distributed on the central axis side due to an influence of an inertial force, and a gas-phase refrigerant is likely to be unevenly distributed on the wall surface side. Therefore, when the refrigerant of the mist flow flowing out of the second outlet 32c flows into the third passage 323, the highly compressible gas-phase refrigerant unevenly distributed on the wall surface side is accelerated by a reduction of a passage cross-sectional area.

When a velocity difference between a velocity of the accelerated gas-phase refrigerant and a velocity of the droplets increases, a velocity relaxation phenomenon occurs between the gas-phase refrigerant and the droplets. When the velocity relaxation phenomenon occurs, a shearing force acts on the droplets from the accelerated gas-phase refrigerant, and miniaturization of the droplets proceeds. Furthermore, the droplets whose total surface area is increased by being miniaturized receive a drag force from the gas-phase refrigerant. Then, the gas-phase refrigerant and the droplets have equal velocities.

Therefore, in the third passage 323, the velocity relaxation phenomenon is caused to bring the velocity in the axial direction of the gas-phase refrigerant and the velocity in the axial direction of the droplets into an equilibrium state (hereinafter referred to as a velocity equilibrium state). More specifically, in a state where the velocity relaxation phenomenon occurs, a local dynamic pressure fluctuation τ of the refrigerant of the mist flow can be expressed by a following Math. F4. A Weber number We, which is a ratio of a dynamic pressure change τ to a surface tension of the droplets, can be expressed by a following Math. F5.
[Math. 4] $τ = {ρ}_{g} \overline{Δ {u}^{2}} = {ρ}_{g} {\left({u}_{g}-{u}_{l}\right)}^{2} , where {u}_{g} > {u}_{l}$ (F4)
[Math. 5] $We = τ / \left(σ/{d}_{p}\right)$ (F5)

ρ_{g} is a density of a gas-phase refrigerant. u_{g} is a local velocity of a gas-phase refrigerant. uₗ is a velocity of a droplet. u is an average velocity of a gas-liquid two-phase refrigerant.

Droplets in the mist flow break up and become fine when a Weber number We exceeds a critical Weber number Wec. Thus, a diameter of the droplets can be reduced so as to approach a theoretical minimum diameter (specifically, about several microns). Therefore, in the third passage 323, a passage cross-sectional area is reduced such that the Weber number We exceeds the critical Weber number Wec (Wec=12 in the present embodiment).

Furthermore, in the third passage 323, the velocity equilibrium state is established, so that a passage cross-sectional area of the third outlet 32d is set such that a mass average velocity uₜₕ₃ of the refrigerant having reached the critical state approaches the momentum-equilibrium phase-change equilibrium sound velocity aₑₑ expressed by Math. F3 described above.

The fourth passage 324 is formed in a shape that expands a passage cross-sectional area from the third outlet 32d of the third passage 323 toward the downstream side in the refrigerant flow direction. In the fourth passage 324, the refrigerant of the mist flow having reached a sound velocity at the third outlet 32d of the third passage 323 is accelerated supersonically. Therefore, the fourth passage 324 is a supersonic acceleration portion.

In the fourth passage 324, a passage cross-sectional area is expanded such that the refrigerant of the mist flow in which the velocity in the axial direction of the gas-phase refrigerant and the velocity in the axial direction of the droplets are in an equilibrium state can be accelerated well. An ejection port 32e is formed at a most downstream portion of the fourth passage 324 in the refrigerant flow.

Here, the third outlet 32d serves as a second-stage throat portion in which a passage cross-sectional area is most reduced among refrigerant passages formed by the third passage 323 and the fourth passage 324. For this reason, the refrigerant passage formed by the third passage 323 and the fourth passage 324 corresponds to a second-stage nozzle in a two-stage expansion type nozzle portion.

According to studies by the present inventors, in the second-stage nozzle, it has been confirmed that by setting an absolute value of an area change rate of the fourth passage 324 to be larger than an absolute value of an area change rate of the third passage 323, a velocity relaxation phenomenon is likely to occur in the third passage 323. Furthermore, it has been confirmed that by setting in a similar manner, the mass average velocity uₜₕ₃ of the refrigerant having reached the critical state at the third outlet 32d can be easily brought close to the momentum-equilibrium phase-change equilibrium sound velocity aₑₑ.

The absolute value of the area change rate of the third passage 323 is an absolute value of a value obtained by dividing a difference between a passage cross-sectional area at an inlet of the third passage 323 (that is, the second outlet 32c) and a passage cross-sectional area at the third outlet 32d by an axial length L3 of the third passage 323. A starting point of the axial length L3 may be a center point of a cross section perpendicular to an axial direction of a refrigerant passage formed by the second outlet 32c, and an ending point may be a center point of a cross section perpendicular to an axial direction of a refrigerant passage formed by the third outlet 32d.

The absolute value of the area change rate of the fourth passage 324 is an absolute value of a value obtained by dividing a difference between a passage cross-sectional area at an inlet of the fourth passage 324 (that is, the third outlet 32d) and a passage cross-sectional area at the ejection port 32e by an axial length L4 of the fourth passage 324. A starting point of the axial length L4 may be a center point of a cross section perpendicular to an axial direction of a refrigerant passage formed by the third outlet 32d, and an ending point may be a center point of a cross section perpendicular to an axial direction of a refrigerant passage formed by the ejection port 32e.

Furthermore, comparing the first-stage nozzle and the second-stage nozzle, it has been confirmed that by setting the absolute value of the area change rate of the third passage 323 to be larger than the absolute value of the area change rate of the second passage 322, a velocity relaxation phenomenon is likely to occur. It has also been confirmed that by setting the absolute value of the area change rate of the fourth passage 324 to be smaller than the absolute value of the area change rate of the second passage 322, the refrigerant of the mist flow can be accelerated well.

Next, the body portion 40 is a cylindrical member forming an outer shell of the ejector 14 and forming a refrigerant passage therein. The nozzle portion 30 is fixed inside one end side of the body portion 40 in a longitudinal direction by means such as press fitting or screw fastening. A central axis of the nozzle passage 32 of the nozzle portion 30 and a central axis of the refrigerant passage of the body portion 40 are arranged coaxially.

The body portion 40 is formed of a metal (an aluminum alloy in the present embodiment). The body portion 40 may be formed of a resin. A suction port 41, a mixing portion 42, an area expanding portion 43, a refrigerant outlet 44, and the like are formed in the body portion 40.

The suction port 41 is a through hole formed in a cylindrical side surface of the body portion 40 at a position on an outer peripheral side of the nozzle portion 30. The suction port 41 sucks a refrigerant flowing out of the refrigerant passage of the second chiller 16b into an inside of the ejector 14. The ejector 14 sucks the refrigerant from the suction port 41 using a pressure drop caused by an expansion wave generated by an ejection refrigerant.

The mixing portion 42 is a refrigerant passage configured to mix the ejection refrigerant ejected from the nozzle portion 30 and a suction refrigerant sucked from the suction port 41 and increase a pressure of a mixed refrigerant. The mixing portion 42 is a refrigerant passage shaped as a rotating body arranged coaxially with the nozzle passage 32. For this reason, at an inlet of the mixing portion 42, the ejection refrigerant flows into a central axis side of the mixing portion 42, and the suction refrigerant flows into an inner wall surface side of the mixing portion 42. Therefore, the mixed refrigerant at the inlet of the mixing portion 42 is in a non-equilibrium state.

A converging mixing portion 42a and a diverging mixing portion 42b are formed in the mixing portion 42. The converging mixing portion 42a is disposed upstream of the diverging mixing portion 42b in the refrigerant flow. The converging mixing portion 42a is formed in a truncated cone shape reducing a passage cross-sectional area toward a downstream side in a refrigerant flow direction. The converging mixing portion 42a is a passage configured to accelerate a mixed refrigerant of an ejection refrigerant and a suction refrigerant to a two-phase sound velocity or higher.

The diverging mixing portion 42b is connected to a downstream side of the converging mixing portion 42a. The diverging mixing portion 42b is formed in a truncated cone shape expanding a passage cross-sectional area toward the downstream side in the refrigerant flow direction. The diverging mixing portion 42b is a passage configured to generate a shock wave in the mixed refrigerant flowing out of the converging mixing portion 42a and further extinguish the generated shock wave.

For this reason, at a connection portion between the converging mixing portion 42a and the diverging mixing portion 42b in the mixing portion 42, a neck portion 42c where a passage cross-sectional area of a refrigerant passage formed in the mixing portion 42 is most reduced is formed. The neck portion 42c serves as an outlet portion of the converging mixing portion 42a and serves as an inlet portion of the diverging mixing portion 42b.

Here, in order to effectively increase a pressure of a mixed refrigerant in the diverging mixing portion 42b, it is necessary to accelerate the mixed refrigerant to a two-phase sound velocity or higher in the converging mixing portion 42a. Therefore, in the converging mixing portion 42a of the present embodiment, a passage cross-sectional area is reduced such that a pressure of a mixed refrigerant in the neck portion 42c in the converging mixing portion 42a is lower than a pressure Pnout of an ejection refrigerant immediately after being ejected from the ejection port 32e of the nozzle portion 30.

Furthermore, in the converging mixing portion 42a, it is desirable to sufficiently mix the mixed refrigerant and the suction refrigerant to bring them into an equilibrium state. Here, an equilibrium state in the converging mixing portion 42a means a state in which a temperature distribution, a pressure distribution, and a velocity distribution hardly exist in the mixed refrigerant. Therefore, in the present embodiment, a converging mixing distance LMIX1 which is a length in an axial direction of the converging mixing portion 42a is set so as to satisfy following Math. F6 and F7.
[Math. 6] $Lv 1 < LMIX 1 \leq 3 \times Lv 1$ (F6)
[Math. 7] $Lv 1 = \frac{{u}_{snin} {ρ}_{l 1} {D}_{l 1}^{2}}{18 {μ}_{g 1}}$ (F7)

uₛₙᵢₙ is a mass average velocity of a refrigerant at the suction port 41. In other words, it is an average velocity in an axial direction of a refrigerant at an inlet portion of the converging mixing portion 42a. ρₗ₁ is a density of droplets in a mixed refrigerant at the suction port 41. Dₗ₁ is an average diameter of droplets at the suction port 41. µ_{g1} is a viscosity of a gas-phase refrigerant in a mixed refrigerant at the suction port 41.

Lv1 is a first relaxation distance obtained by integrating a dimensionless relaxation number representing a ratio of an inertial force and a viscosity of droplets to the mass average velocity uₛₙᵢₙ of the mixed refrigerant at the inlet portion of the converging mixing portion 42a. More specifically, the first relaxation distance Lv1 is a value obtained by integrating a first velocity relaxation time _{TV}1 required until a velocity of a gas-phase refrigerant and a velocity of droplets in the mixed refrigerant become equal, to the mass average velocity uₛₙᵢₙ serving as an initial velocity of the mixed refrigerant at the inlet portion of the converging mixing portion 42a.

According to studies by the present inventors, it has been confirmed that if the converging mixing distance LMIX1 is set so as to satisfy Math. F6 and F7, even if a degree of dryness Xₛₙᵢₙ at the inlet portion of the converging mixing portion 42a changes in a wide range, the mixed refrigerant in the neck portion 42c falls into an equilibrium state and is accelerated to a two-phase sound velocity or higher.

In the diverging mixing portion 42b, since a passage cross-sectional area of the mixed refrigerant in an equilibrium state having reached the two-phase sound velocity is expanded, an expansion wave is generated in the mixed refrigerant immediately after the neck portion 42c, that is, in the mixed refrigerant near the inlet portion of the diverging mixing portion 42b. The expansion wave generated in the diverging mixing portion 42b generates a shock wave having an inner wall surface side of the body portion 40 as a leading edge. Then, a pressure of a refrigerant is increased by an energy of the shock wave.

Furthermore, in the mixed refrigerant flowing through the diverging mixing portion 42b, a pseudo shock wave in which multiple shock waves and expansion waves are repeatedly generated is generated according to a Mach number of the mixed refrigerant. Specifically, when a Mach number of a mixed refrigerant in a central portion exceeds approximately 1.3, a pseudo shock wave is generated at a central portion of a shock wave. The mixed refrigerant increases a pressure and an enthalpy when passing through repeatedly generated shock waves.

When a pseudo shock wave occurs, a central axis side static pressure, which is a refrigerant pressure on a central axis side of the diverging mixing portion 42b, and a wall surface side static pressure, which is a refrigerant pressure on a wall surface side, change by different values, which causes an energy loss due to a friction of a mixed refrigerant.

Therefore, in order to improve the pressure boosting capacity of the ejector 14, it is desirable to extinguish a pseudo shock wave in the diverging mixing portion 42b. Furthermore, it is known that in order to extinguish a pseudo shock wave, a velocity of a mixed refrigerant needs to be reduced to a subsonic velocity.

Therefore, in the diverging mixing portion 42b of the present embodiment, a passage cross-sectional area is expanded so that a velocity of a mixed refrigerant at an outlet portion of the diverging mixing portion 42b can rapidly become subsonic. Furthermore, in the diverging mixing portion 42b, it is desirable to shorten an extinction distance from a generation of a pseudo shock wave until an extinction thereof. Therefore, in the present embodiment, a diverging mixing distance LMIX2 which is a length in an axial direction of the diverging mixing portion 42b is set so as to satisfy following Math. F8 and F9.
[Math. 8] $Lv 2 < LMIX 2 \leq 6 \times Lv 2$ (F8)
[Math. 9] $Lv 2 = \frac{{u}_{neck} {ρ}_{l 2} {D}_{l 2}^{2}}{18 {μ}_{g 2}}$ (F9)

u_{neck} is a mass average velocity of a refrigerant at the neck portion 42c. In other words, it is an average velocity in an axial direction of a refrigerant at the neck portion 42c. ρₗ₂ is a density of droplets in a mixed refrigerant at the neck portion 42c. Dₗ₂ is an average diameter of droplets at the neck portion 42c. µ_{g2} is a viscosity of a gas-phase refrigerant in a mixed refrigerant at the neck portion 42c.

Lv2 is a second relaxation distance obtained by integrating a dimensionless relaxation number representing a ratio of an inertial force and a viscosity of droplets to the mass average velocity u_{neck} of the mixed refrigerant at the neck portion 42c. More specifically, the second relaxation distance Lv2 represents a distance obtained by integrating a second velocity relaxation time _{TV}2 required until a flow velocity of a gas-phase refrigerant and a flow velocity of droplets in the mixed refrigerant become equal, to the mass average velocity u_{neck} serving as an initial velocity of the mixed refrigerant at the neck portion 42c.

According to studies by the present inventors, it has been confirmed that if the diverging mixing distance LMIX2 is set so as to satisfy Math. F8 and F9, a pseudo shock wave extinguishes within the diverging mixing portion 42b even if a degree of dryness X_{neck} at the neck portion 42c changes in a wide range.

Furthermore, if a Mach number of an ejection refrigerant ejected from the ejection port 32e of the nozzle portion 30 exceeds approximately 1.3 to 1.5, an expansion wave generated at the ejection port 32e is reflected by a velocity boundary layer with a suction flow, thereby a pseudo shock wave is generated also inside the converging mixing portion 42a.

On the other hand, in the ejector 14 of the present embodiment, the diverging mixing distance LMIX2 is set to satisfy Math. F8 and F9. Therefore, within the diverging mixing portion 42b, a pseudo shock wave generated using an inner wall of the diverging mixing portion 42b as a leading edge may be extinguished, and at the same time, a pseudo shock wave generated inside the converging mixing portion 42a may also be extinguished. As a result, the ejector 14 may obtain a stable pressure boosting action.

The area expanding portion 43 is connected to a downstream side of the mixing portion 42. The area expanding portion 43 is formed in a truncated cone shape expanding a passage cross-sectional area toward the downstream side in the refrigerant flow direction. The area expanding portion 43 forms a refrigerant passage for smoothly connecting the outlet portion of the diverging mixing portion 42b and the refrigerant outlet 44. The area expanding portion 43 may be formed in a cylindrical shape having a constant passage cross-sectional area as long as it does not have a shape reducing a passage cross-sectional area in a flow direction of a mixed refrigerant.

Next, the cooling water circuit 60 will be described. The cooling water circuit 60 is a circuit circulating cooling water. In the present embodiment, an ethylene glycol aqueous solution is employed as the cooling water. In the cooling water circuit 60, the cooling water pump 61, the cooling water passage of the first chiller 16a, a cooling water passage of the second chiller 16b, a cooling water passage of the battery 80, and the like are disposed.

The cooling water pump 61 is a cooling water pumping portion configured to suck and pump cooling water flowing out of the cooling water passage of the battery 80. The cooling water pump 61 is an electric water pump whose rotation speed (that is, pumping capacity) is controlled by a control voltage output from the control device 70.

An inlet side of the cooling water passage of the first chiller 16a is connected to a discharge port of the cooling water pump 61. An inlet side of the cooling water passage of the second chiller 16b is connected to an outlet of the cooling water passage of the first chiller 16a. An inlet side of the cooling water passage of the battery 80 is connected to an outlet of the cooling water passage of the second chiller 16b.

The cooling water passage of the battery 80 is a passage for causing the cooling water flowing out of the second chiller 16b to flow and cooling the battery 80. That is, in the cooling water passage of the battery 80, the battery 80 is cooled by exchanging heat between the cooling water and battery cells.

The cooling water passage of the battery 80 is formed inside an exclusive battery case housing multiple battery cells arranged in a stacked manner. A passage configuration of the cooling water passage of the battery 80 is a passage configuration in which multiple passages are connected in parallel inside the exclusive battery case so that all battery cells can be cooled uniformly. A suction port side of the cooling water pump 61 is connected to an outlet of the cooling water passage of the battery 80.

Therefore, when the control device 70 operates the cooling water pump 61, in the cooling water circuit 60, cooling water pumped from the cooling water pump 61 circulates through the cooling water passage of the first chiller 16a, the cooling water passage of the second chiller 16b, the cooling water passage of the battery 80, and the suction port of the cooling water pump 61 in this order.

Next, an electric control section of the vehicular refrigeration cycle device 1 will be described. The control device 70 includes a well-known microcomputer including a CPU, a ROM, a RAM, and the like, and its peripheral circuits. The control device 70 performs various calculations and processing based on a control program stored in the ROM. Then, the control device 70 controls operations of various control target devices connected to an output side based on results of calculations and processing.

A sensor group for various controls is connected to an input side of the control device 70. The control sensor group includes an unillustrated discharge pressure sensor, high-pressure temperature sensor, suction pressure sensor, suction temperature sensor, evaporation portion temperature sensor, cooling water temperature sensor, and the like.

The discharge pressure sensor is a discharge pressure detection portion configured to detect a discharge pressure Pd which is a pressure of a discharge refrigerant discharged from the compressor 11. The high-pressure temperature sensor is a high-pressure temperature detection portion configured to detect a high-pressure temperature Td which is a temperature of a refrigerant flowing out of the outdoor heat exchanger 12.

The suction pressure sensor is a suction pressure detection portion configured to detect a suction pressure Ps which is a pressure of a suction refrigerant. The suction temperature sensor is a suction temperature detection portion configured to detect a suction temperature Ts which is a temperature of a suction refrigerant sucked into the compressor 11.

The evaporation portion temperature sensor is an evaporation portion temperature detection portion configured to detect an evaporation portion temperature Te which is a temperature of a refrigerant flowing out of the second chiller 16b. The cooling water temperature sensor is a cooling water temperature detection portion configured to detect a cooling water temperature TwB which is a temperature of cooling water flowing out of the cooling water passage of the battery 80.

The control device 70 is configured such that a control portion for controlling various control target devices connected to an output side is integrally formed. Therefore, a configuration (hardware and software) for controlling an operation of each control target device constitutes a control portion controlling the operation of each control target device. For example, among the control device 70, a configuration for controlling the refrigerant discharge capacity of the compressor 11 constitutes a discharge capacity control portion.

Next, an operation of the vehicular refrigeration cycle device 1 of the present embodiment having the above configuration will be described. The control device 70 executes a control program stored in the ROM when a predetermined execution condition is satisfied. In the present embodiment, an execution condition is satisfied when a start switch (so-called ignition switch) of a vehicle system is turned on and the vehicle system starts, or when a charging connector of the battery 80 is connected to a vehicle, or the like.

When a control program is executed, the control device 70 operates the cooling water pump 61 so as to exhibit a predetermined reference pumping capacity. Further, the control program reads detection signals of the control sensor group at every predetermined control cycle. Then, based on a read control signal, it is determined whether cooling of the battery 80 is required.

A control program of the present embodiment determines that cooling of the battery 80 is required when the cooling water temperature TwB reaches or exceeds a predetermined reference cooling start temperature KTwBH in a state where cooling of the battery 80 by the ejector-type refrigeration cycle 10 is not performed. In addition, when cooling of the battery 80 by the ejector-type refrigeration cycle 10 is performed, and the cooling water temperature TwB falls to or below a predetermined reference cooling stop temperature KTwBL, it is determined that cooling of the battery 80 is not required.

When it is determined that cooling of the battery 80 is required, the control device 70 controls operations of various constituent devices of the ejector-type refrigeration cycle 10 to cool a battery. Specifically, the control device 70 controls a rotation speed of the compressor 11 such that the evaporation portion temperature Te approaches a predetermined reference evaporation portion temperature KTe.

Further, the control device 70 controls a throttle opening degree of the electric expansion valve 15 such that a subcooling degree SC of a refrigerant flowing into the electric expansion valve 15 approaches a target subcooling degree SCO. The control device 70 detects a subcooling degree SC based on the discharge pressure Pd and the high-pressure temperature Td. The control device 70 determines a target subcooling degree SCO with reference to a pre-stored control map based on the discharge pressure Pd. In a control map, the target subcooling degree SCO is determined such that a COP of the ejector-type refrigeration cycle 10 becomes a maximum value.

Further, the control device 70 controls an operation of the initial velocity adjustment valve 50 of the ejector 14 such that a superheating degree SH of a suction refrigerant approaches a predetermined reference superheating degree KSH. The control device 70 detects a superheating degree SH based on the suction pressure Ts and the suction temperature Ts.

Therefore, in the ejector-type refrigeration cycle 10, a state of a refrigerant changes as shown in a Mollier diagram of FIG. 7. That is, a discharge refrigerant discharged from the compressor 11 (point a7 in FIG. 7) flows into the outdoor heat exchanger 12. A discharge refrigerant flowing into the outdoor heat exchanger 12 releases heat to an outside air blown from an outside air fan, condenses, and becomes a subcooled liquid-phase refrigerant (from point a7 to point b7 in FIG. 7).

A flow of a subcooled liquid-phase refrigerant flowing out of the outdoor heat exchanger 12 is branched at the branch portion 13. One refrigerant flowing out of the branch portion 13 flows into the refrigerant inlet 33 of the ejector 14. Therefore, in the ejector 14, a subcooled liquid-phase refrigerant flowing out of the outdoor heat exchanger 12 becomes a drive-side fluid.

A refrigerant flowing into the initial velocity adjustment space 31 through the refrigerant inlet 33 of the ejector 14 flows into the nozzle passage 32 after its initial velocity is adjusted by the initial velocity adjustment valve 50. A refrigerant flowing into the nozzle passage 32 is depressurized in the first passage 321 and reaches a critical state in the second passage 322 (from point b7 to point c7 in FIG. 7). A velocity of a refrigerant having reached a critical state in the second passage 322 becomes the momentum-frozen phase-change equilibrium sound velocity a_{fe}.

As described above, in the second passage 322, since a velocity of a gas-phase refrigerant and a velocity of droplets are in a non-equilibrium state, a slip ratio increases as a passage cross-sectional area expands, and a volume content of droplets in a refrigerant of a mist flow decreases. A slip ratio is a ratio of a velocity of droplets to a velocity of a gas-phase refrigerant in a mist flow. For this reason, in the second passage 322, as a passage cross-sectional area of a portion where a refrigerant reaches a critical state expands, a critical flow rate decreases.

Therefore, an initial velocity adjustment valve 50 lowers an initial velocity of a refrigerant flowing into the nozzle passage 32, so that a position where a refrigerant reaches a critical state in the second passage 322 may be moved to an upstream side of a refrigerant flow, and a critical flow rate may be increased. In addition, an initial velocity adjustment valve 50 increases an initial velocity of a refrigerant flowing into the nozzle passage 32, so that a position where a refrigerant reaches a critical state in the second passage 322 may be moved to a downstream side of a refrigerant flow, and a critical flow rate may be decreased.

A refrigerant having reached a critical state in the second passage 322 flows into the third passage 323 while converting a velocity energy into a pressure energy. A refrigerant of a mist flow in which a velocity in an axial direction of a gas-phase refrigerant and a velocity in an axial direction of droplets have reached an equilibrium state in the third passage 323 reaches a critical state again at the third outlet 32d (from point c7 to point d7 in FIG. 7). A velocity of a refrigerant having reached a critical state at the third outlet 32d becomes the momentum-equilibrium phase-change equilibrium sound velocity aₑₑ.

As described above, the momentum-equilibrium phase-change equilibrium sound velocity aₑₑ is lower than the momentum-frozen phase-change equilibrium sound velocity a_{fe}. That is, a velocity in an axial direction of a refrigerant having reached a critical state at the third outlet 32d is lower than a velocity in an axial direction of a refrigerant having reached a critical state in the second passage 322. For this reason, a pressure of a refrigerant having reached a critical state at the third outlet 32d is higher than a pressure of a refrigerant having reached a critical state in the second passage 322.

Then, a refrigerant having reached a critical state at the third outlet 32d is accelerated supersonically in the fourth passage 324 (from point d7 to point e7 in FIG. 7), and is ejected to the mixing portion 42 from the ejection port 32e.

In the nozzle portion 30 of the present embodiment, a mist flow is accelerated by causing a refrigerant to reach a critical state in the second passage 322 and further causing a refrigerant to reach a critical state at the third outlet 32d. According to this, a depressurization process of a refrigerant in the nozzle passage 32 (process from point b7 to point e7 in FIG. 7) may be changed so as to follow an isentropic line indicated by a thin broken line in FIG. 7 determined by physical properties of a refrigerant.

As a result, a pressure energy possessed by a subcooled liquid-phase refrigerant flowing out of the outdoor heat exchanger 12 may be effectively recovered and converted into a velocity energy. In a Mollier diagram of FIG. 7, an energy amount recovered by the nozzle portion 30 is represented by Δh1.

Another refrigerant flowing out of the branch portion 13 flows into the electric expansion valve 15 and is isenthalpically depressurized (from point b7 to point f7 in FIG. 7). A refrigerant in a gas-liquid two-phase state depressurized by the electric expansion valve 15 flows into the second chiller 16b.

In the second chiller 16b, a refrigerant depressurized by the electric expansion valve 15 absorbs heat from cooling water and evaporates (from point f7 to point g7 in FIG. 7). Thus, cooling water is cooled. A refrigerant flowing out of the second chiller 16b (point g7 in FIG. 7) is sucked from the suction port 41 of the ejector 14. Therefore, in the ejector 14 of the present embodiment, a refrigerant flowing out of the second chiller 16b becomes a suction-side fluid.

Inside the ejector 14, an ejection refrigerant having a relatively low enthalpy ejected from the nozzle portion 30 (point e7 in FIG. 7) and a suction refrigerant having a relatively high enthalpy sucked from the suction port 41 (point g in FIG. 7) join at the converging mixing portion 42a to become a mixed refrigerant (from point e7 to point h7, and from point g7 to point h7 in FIG. 7).

Here, since a refrigerant mixed in the converging mixing portion 42a is in a non-equilibrium state, it is difficult to show it at a single point on a Mollier diagram. Therefore, point h7 in FIG. 7 schematically shows a state of a typical refrigerant near the neck portion 42c. This also applies to following embodiments.

A mixed refrigerant flowing from the converging mixing portion 42a to the diverging mixing portion 42b is in an equilibrium state and its pressure is effectively increased by an action of a shock wave (from point h7 to point i7 in FIG. 7). A refrigerant boosted in the diverging mixing portion 42b flows out of the refrigerant outlet 44 via the area expanding portion 43 and flows into the first chiller 16a.

In the first chiller 16a, a refrigerant flowing out of the ejector 14 absorbs heat from cooling water and evaporates (from point i7 to point j7 in FIG. 7). Thus, cooling water is cooled. A refrigerant flowing out of the first chiller 16a (point j7 in FIG. 7) is sucked into the compressor 11 and compressed again (from point j7 to point a7 in FIG. 7).

In the cooling water circuit 60, cooling water pumped from the cooling water pump 61 flows into the cooling water passage of the first chiller 16a and is cooled. Cooling water cooled in the first chiller 16a flows into the cooling water passage of the second chiller 16b and is further cooled.

Cooling water cooled in the second chiller 16b flows into the cooling water passage of the battery 80. Cooling water flowing into the cooling water passage of the battery 80 exchanges heat with the battery 80. Thus, the battery 80 is cooled. Cooling water flowing out of the cooling water passage of the battery 80 is sucked into the cooling water pump 61.

In the ejector-type refrigeration cycle 10, a refrigerant evaporation temperature of the second chiller 16b is lower than a refrigerant evaporation temperature of the first chiller 16a. For this reason, in the cooling water circuit 60, cooling water pumped from the cooling water pump 61 may be efficiently cooled in an order of the first chiller 16a and the second chiller 16b.

As described above, in the vehicular refrigeration cycle device 1, the battery 80 may be cooled. Furthermore, since the ejector-type refrigeration cycle 10 includes the ejector 14, even if a load fluctuation occurs when a heat generation amount of the battery 80 changes or the like, a sufficiently high COP is exhibited regardless of a load fluctuation.

More specifically, the ejector 14 of the present embodiment generates bubbles in a liquid-phase refrigerant in the first passage 321, and changes a mode of a flow of a refrigerant from a bubble flow to a mist flow. Furthermore, in the second passage 322, a refrigerant having become a mist flow is brought to a critical state. Therefore, in the second passage 322, a velocity of a refrigerant having become a mist flow is brought close to a sound velocity, and a velocity of an ejection refrigerant ejected from the ejection port 32e may be increased. As a result, the nozzle efficiency ηnoz may be improved, and a pressure boosting capacity of the ejector 14 may be improved.

Furthermore, a critical flow rate of a refrigerant having reached a critical state changes according to a passage cross-sectional area of a portion where a refrigerant reaches a critical state in the second passage 322. Therefore, when a flow rate fluctuation occurs in a drive-side refrigerant, a flow rate of a refrigerant flowing through the nozzle passage 32 may be appropriately adjusted by changing a position where a refrigerant reaches a critical state in the second passage 322.

That is, it is not necessary to change a passage cross-sectional area of the first outlet 32b corresponding to a first-stage throat portion of a first-stage nozzle in order to change a flow rate of a refrigerant flowing through the nozzle passage 32. Therefore, even if a flow rate fluctuation occurs in a drive-side refrigerant, a generation mode and a generation amount of bubbles generated in a liquid-phase refrigerant in a vicinity of a wall surface of the first outlet 32b are less likely to be affected.

As a result, in the ejector 14 of the present embodiment, regardless of a flow rate fluctuation of a refrigerant flowing into the nozzle portion 30, sufficient bubbles may be generated in a liquid-phase refrigerant, and a velocity of an ejection refrigerant may be increased. That is, a high pressure boosting capacity may be exhibited regardless of a flow rate fluctuation of a refrigerant flowing into the nozzle portion 30. Furthermore, since the ejector-type refrigeration cycle 10 includes the ejector 14, a sufficiently high COP may be exhibited regardless of a load fluctuation.

Further, in the ejector 14 of the present embodiment, a velocity in an axial direction of a refrigerant in the second passage 322 of the nozzle passage 32 is brought close to the momentum-frozen phase-change equilibrium sound velocity a_{fe}. According to this, even if a pressure undershoot phenomenon occurs when a subcooled liquid-phase refrigerant is depressurized and boiled, and a velocity of a refrigerant in a velocity non-equilibrium state flowing into the second passage 322 increases, a refrigerant may be brought to a critical state in the second passage 322.

Further, in the ejector 14 of the present embodiment, the constant area portion 321b is formed in the first passage 321 of the nozzle passage 32. In the constant area portion 321b, a velocity of a refrigerant is not unnecessarily increased. Therefore, bubbles detached from a passage wall surface may be quickly moved toward a central axis direction and collapsed. That is, by forming the constant area portion 321b in the first passage 321, a mode of a flow of a refrigerant is easily changed from a bubble flow to a mist flow.

Further, in the ejector 14 of the present embodiment, the third passage 323 and the fourth passage 324 are formed in the nozzle passage 32. According to this, in the third passage 323, droplets may be miniaturized by effectively utilizing a velocity energy of a refrigerant having reached a critical state in the second passage 322. Furthermore, since a refrigerant is brought to a critical state at the third outlet 32d, miniaturized droplets may be accelerated supersonically together with a gas-phase refrigerant in the fourth passage 324. As a result, a velocity of an ejection refrigerant may be further increased, and the nozzle efficiency ηnoz may be improved.

Further, in the ejector 14 of the present embodiment, a velocity in an axial direction of a refrigerant at the third outlet 32d of the nozzle passage 32 is brought close to the momentum-equilibrium phase-change equilibrium sound velocity aₑₑ. According to this, a pressure of a refrigerant at the third outlet 32d may be increased to be higher than a pressure of a refrigerant having reached a critical state in the second passage 322. Therefore, in the fourth passage 324, a pressure energy of a refrigerant may be used to effectively accelerate miniaturized droplets together with a gas-phase refrigerant.

Further, in the converging mixing portion 42a of the ejector 14 of the present embodiment, the converging mixing distance LMIX1 is set so as to satisfy Math. F6 and F7 described above.

According to this, a mixed refrigerant in a vicinity of the neck portion 42c downstream of the converging mixing portion 42a may be brought close to an equilibrium state. That is, a velocity in an axial direction of droplets included in a mixed refrigerant in a vicinity of the neck portion 42c and a velocity in an axial direction of a gas-phase refrigerant may be made equal to each other. Therefore, a sound velocity in a mixed refrigerant in a vicinity of the neck portion 42c may be lowered from a gas-phase sound velocity to a two-phase sound velocity.

As a result, a Mach number M_{nech} of a mixed refrigerant at the neck portion 42c may be increased, and a pressure boosting capacity of the ejector 14 may be improved. Furthermore, in the ejector 14 of the present embodiment, due to an improvement in the nozzle efficiency ηnoz of the nozzle portion 30, a difference between a velocity of an ejection refrigerant and a velocity of a suction refrigerant tends to increase. For this reason, bringing a mixed refrigerant close to an equilibrium state at the neck portion 42c is extremely effective for improving a pressure boosting capacity.

Further, the diverging mixing portion 42b of the ejector 14 of the present embodiment is set such that the diverging mixing distance LMIX2 satisfies Math. F8 and F9 described above. According to this, a mixed refrigerant at an outlet portion of the diverging mixing portion 42b may be brought close to an equilibrium state. Therefore, a pseudo shock wave may be reliably extinguished in the diverging mixing portion 42b.

Furthermore, in the ejector 14 of the present embodiment, a refrigerant close to an equilibrium state may flow out from the refrigerant outlet 44 of the ejector 14.

According to this, a suction pressure Ps and a suction temperature Ts of a suction refrigerant close to an equilibrium state may be detected by a suction pressure sensor and a suction temperature sensor. Therefore, the control device 70 may accurately detect a superheating degree SH of a suction refrigerant, and may bring a superheating degree SH of a suction refrigerant close to a reference superheating degree KSH with high accuracy. That is, liquid compression of the compressor 11 may be accurately suppressed.

Further, the ejector-type refrigeration cycle 10 of the present embodiment includes the initial velocity adjustment valve 50. According to this, regardless of a load fluctuation, a velocity of a refrigerant flowing into the nozzle inlet 32a of the ejector 14 may be easily adjusted, and a critical flow rate of a refrigerant in the second passage 322 may be easily adjusted.

Further, in the present embodiment, a method for operating a nozzle device capable of improving the nozzle efficiency ηnoz regardless of a flow rate fluctuation of an inflowing fluid is disclosed.

That is, as a method for operating a nozzle device constituted by the nozzle portion 30 and the initial velocity adjustment valve 50, a method for operating is disclosed in which bubbles are generated in a fluid in a liquid phase in the first passage 321, a fluid is brought to a critical state in the second passage 322, and a position where a fluid becomes a critical state in the second passage is changed by adjusting a velocity of a fluid flowing into the nozzle inlet 32a.

According to this, in the first passage 321, bubbles are generated in a fluid in a liquid phase, and a mode of a flow of a fluid may be changed from a bubble flow to a mist flow. Furthermore, in the second passage 322, a fluid having become a mist flow is brought to a critical state. Therefore, in the second passage 322, a velocity of a fluid having become a mist flow is brought close to a sound velocity, and a velocity of an ejection fluid may be increased. As a result, the nozzle efficiency ηnoz may be improved.

Furthermore, since a position where a fluid becomes a critical state in the second passage 322 is changed by adjusting a velocity of a drive-side fluid flowing into the nozzle inlet 32a, a critical flow rate may be changed according to a passage cross-sectional area at a position where a fluid becomes a critical state. That is, it is not necessary to change a passage cross-sectional area of the first outlet 32b in order to change a flow rate of a fluid flowing through the nozzle passage 32.

Therefore, even if a flow rate fluctuation of a drive-side fluid occurs, a generation mode and a generation amount of bubbles generated in a liquid-phase fluid in a vicinity of a wall surface of the first outlet 32b are less likely to be affected. As a result, according to a method for operating a nozzle device of the present embodiment, the nozzle efficiency ηnoz may be improved regardless of a flow rate fluctuation of a drive-side fluid. Further, a nozzle device of the present embodiment includes the initial velocity adjustment valve 50. According to this, a critical flow rate of a refrigerant in the second passage 322 may be easily adjusted.

### (Second Embodiment)

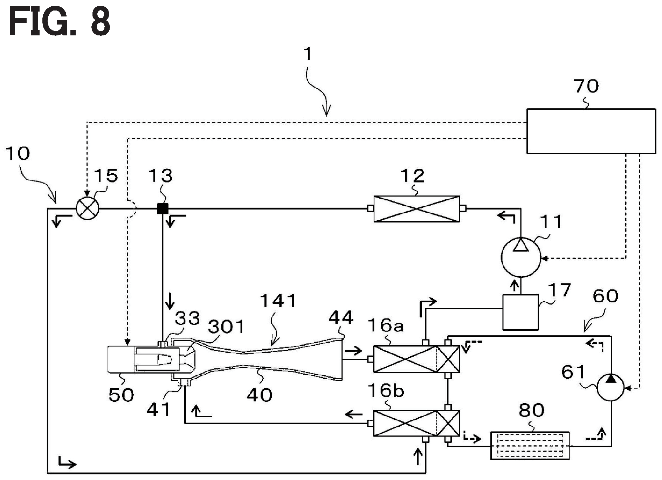

In the present embodiment, as shown in an overall configuration diagram of FIG. 8, an example in which an ejector-type refrigeration cycle 10 including an ejector 141 is applied to a vehicular refrigeration cycle device 1 will be described.

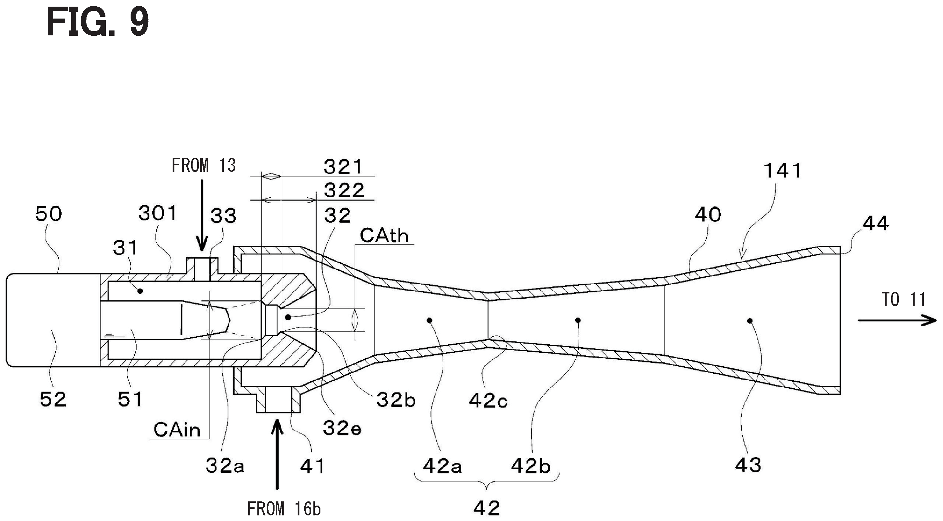

As shown in FIG. 9, the ejector 141 employs a nozzle portion 301 instead of the ejector 14 described in the first embodiment. In the nozzle portion 301 of the ejector 141, the third passage 323 and the fourth passage 324 are eliminated. Therefore, in the nozzle portion 301, a second outlet of the second passage 322 serves as an ejection port 32e.

Further, in the ejector-type refrigeration cycle 10 of the present embodiment, carbon dioxide (that is, R744) is employed as a refrigerant. The ejector-type refrigeration cycle 10 of the present embodiment constitutes a supercritical refrigeration cycle in which a pressure of a high-pressure side refrigerant becomes equal to or higher than a critical pressure of a refrigerant.

In the ejector-type refrigeration cycle 10 of the present embodiment, a relatively high pressure refrigerant in a supercritical state flows into the nozzle portion 301 of the ejector 141. When a refrigerant in a supercritical state flows into the nozzle portion 301, a velocity of droplets included in a refrigerant in a gas-liquid two-phase state in a depressurization process becomes faster than a sound velocity of a gas-liquid two-phase refrigerant. Therefore, bubble nuclei necessary for evaporating a refrigerant having become a liquid phase in a depressurization process are insufficient.

As a result, a heat radiation time from droplets generated by depressurization foaming to a surrounding gas-phase refrigerant becomes insufficient, and a temperature of droplets becomes higher than a saturation temperature of a refrigerant. That is, a part of a pressure energy of a refrigerant flowing into the nozzle portion 301 cannot be converted into a kinetic energy, and is stored as a heat energy in droplets.

Therefore, in the ejector-type refrigeration cycle 10 of the present embodiment, a refrigerant may be in a thermodynamic non-equilibrium state in the first passage 321 or the first outlet 32b where a velocity difference between droplets and a gas-phase refrigerant tends to expand. If a refrigerant is in a thermodynamic non-equilibrium state, a velocity of a refrigerant in the ejector 141 cannot be sufficiently accelerated, and the ejector 141 cannot exhibit a sufficient fluid pressure boosting action.

Therefore, in the ejector 141, an area ratio CAin/CAth of the first passage 321 is set to 10 or less. An area ratio of the first passage 321 is a ratio of a passage cross-sectional area CAin at the nozzle inlet 32a to a passage cross-sectional area CAth at the first outlet 32b. Thus, a slip ratio of a gas-liquid two-phase refrigerant in the first passage 321 or the first outlet 32b is adjusted so that a thermodynamic non-equilibrium state can be eliminated in the second passage 322.

More specifically, by setting an area ratio CAin/CAth of the first passage 321 to 10 or less, an acceleration amount of a liquid-phase refrigerant in the first passage 321 may be suppressed. Therefore, a position where foaming of a refrigerant is started may be brought close to the first outlet 32b. Then, in a mist flow generated after foaming, a velocity difference between a gas-phase refrigerant and droplets is generated to promote heat radiation from droplets having a temperature higher than a saturation temperature to a surrounding gas-phase refrigerant. As a result, a thermodynamic non-equilibrium state can be eliminated in the second passage 322.

Furthermore, in the ejector 141, a passage cross-sectional area of the mixing portion 42 is changed so that even if an ejection refrigerant ejected from the nozzle portion 301 is in a thermodynamic non-equilibrium state, a thermodynamic non-equilibrium state of a mixed refrigerant in the mixing portion 42 can be eliminated.

Specifically, in a refrigerant such as R744 in which a density ratio of a density of droplets to a density of a gas-phase refrigerant is relatively small, droplets included in an ejection refrigerant easily diffuse into the mixing portion 42. Therefore, a degree of reduction of a passage cross-sectional area of the converging mixing portion 42a is set so that a velocity of a suction refrigerant is sufficiently accelerated, and heat radiation of a suction refrigerant from droplets can be promoted.

Thus, even if an ejection refrigerant is in a thermodynamic non-equilibrium state, droplets included in an ejection refrigerant are diffused into the mixing portion 42, and heat possessed by droplets is radiated to an accelerated and depressurized suction refrigerant, whereby a thermodynamic non-equilibrium state can be eliminated in the mixing portion 42.

In the converging mixing portion 42a of the present embodiment, a pressure of at least a part of a mixed refrigerant in the converging mixing portion 42a is lower than a pressure of an ejection refrigerant at the ejection port 32e of the nozzle portion 301, whereby a velocity of a suction refrigerant is sufficiently accelerated. Furthermore, in the converging mixing portion 42a of the present embodiment, a degree of reduction of a passage cross-sectional area is determined in a range where the converging mixing distance LMIX1 satisfies Math. F6 and F7 described in the first embodiment.

Further, in the ejector-type refrigeration cycle 10 of the present embodiment, an inlet side of an accumulator 17 is connected to a refrigerant outlet of the first chiller 16a with respect to the first embodiment. The accumulator 17 is a low-pressure side gas-liquid separation portion configured to separate gas and liquid of a refrigerant flowing out of the first chiller 16a and store separated liquid-phase refrigerant as an excess refrigerant of a cycle. A suction port side of the compressor 11 is connected to a gas-phase refrigerant outlet of the accumulator 17. Other configurations of the vehicular refrigeration cycle device 1 are similar to those of the first embodiment.

Next, an operation of the vehicular refrigeration cycle device 1 of the present embodiment having the above configuration will be described. Also in a control program of the present embodiment, when it is determined that cooling of the battery 80 is required similarly to the first embodiment, the control device 70 controls operations of various control target devices.

In the present embodiment, the control device 70 controls a throttle opening degree of the electric expansion valve 15 such that a pressure P1 and a temperature T1 of a refrigerant flowing into the electric expansion valve 15 approach a target pressure PO1 and a target temperature TO1. A target pressure PO1 and a target temperature TO1 are determined such that a COP of a cycle approaches a maximum value. In addition, the control device 70 controls an operation of the initial velocity adjustment valve 50 so that a thermodynamic non-equilibrium state of a refrigerant is eliminated.

Other control target devices are controlled in the same manner as in the first embodiment. Furthermore, in the ejector-type refrigeration cycle 10 of the present embodiment, a change in a state of a refrigerant during a normal operation in which a flow rate of a circulating refrigerant circulating through a cycle is relatively small differs from a state of a refrigerant during a high load operation in which a flow rate of a circulating refrigerant circulating through a cycle is relatively large.

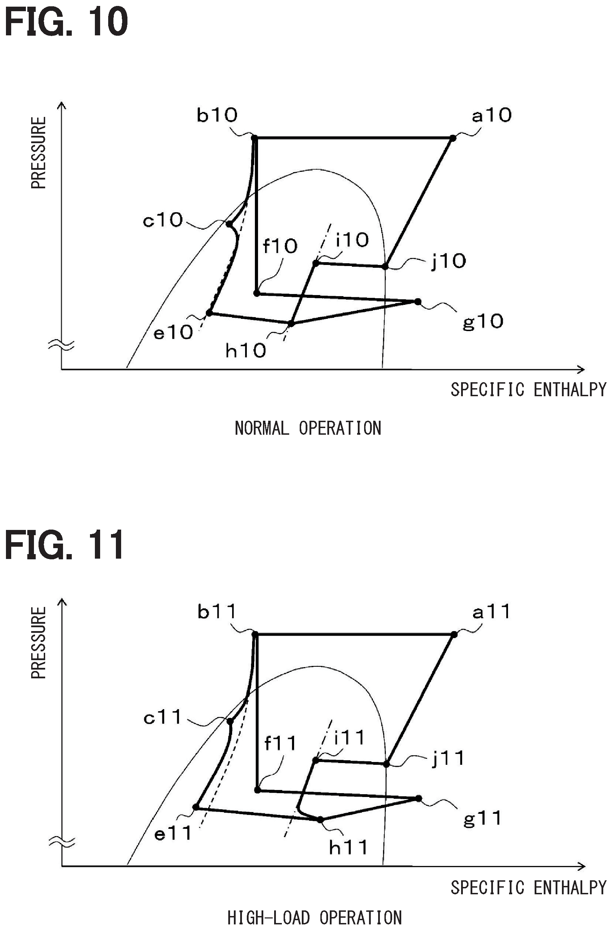

First, during a normal operation, a state of a refrigerant changes as shown in a Mollier diagram of FIG. 10. In FIG. 10, states of refrigerants at locations equivalent to each other in a cycle configuration are denoted by the same reference numerals (alphabets) as those in FIG. 7 described in the first embodiment, and only subscripts (numbers) are changed according to drawing numbers.

A discharge refrigerant (point a10 in FIG. 10) boosted to a critical pressure or higher in the compressor 11 flows into the outdoor heat exchanger 12. A discharge refrigerant flowing into the outdoor heat exchanger 12 releases heat to an outside air blown from an outside air fan to decrease an enthalpy (from point a10 to point b10 in FIG. 10). A flow of a subcooled liquid-phase refrigerant flowing out of the outdoor heat exchanger 12 is branched at the branch portion 13. One refrigerant flowing out of the branch portion 13 flows into the refrigerant inlet 33 of the ejector 141.

A refrigerant flowing into the initial velocity adjustment space 31 via the refrigerant inlet 33 of the ejector 141 flows into the nozzle passage 32 after its initial velocity is adjusted by the initial velocity adjustment valve 50. A refrigerant flowing into the nozzle passage 32 is depressurized in the first passage 321 and becomes a gas-liquid two-phase refrigerant in a thermodynamic non-equilibrium state (from point b10 to point c10 in FIG. 10). Then, it reaches a critical state in the second passage 322. The second passage 322 includes the first outlet 32b serving as an inlet of the second passage 322.

Here, a thin broken line in FIG. 10 is an inlet-side isentropic line indicating an entropy equivalent to that of a refrigerant flowing into the nozzle passage 32. As shown in FIG. 10, a refrigerant in a thermodynamic non-equilibrium state (point c10 in FIG. 10) deviates from an inlet-side isentropic line because droplets store a heat energy.

On the other hand, in the ejector 141 of the present embodiment, a passage cross-sectional area of a refrigerant passage of the nozzle portion 301 is changed so that a thermodynamic non-equilibrium state of a refrigerant can be eliminated in the second passage 322 during a normal operation. Furthermore, the initial velocity adjustment valve 50 adjusts an initial velocity of a refrigerant flowing into the nozzle passage 32 so that a thermodynamic non-equilibrium state of a refrigerant in the second passage 322 is eliminated.

Therefore, an ejection refrigerant ejected from the ejection port 32e approaches an inlet-side isentropic line (from point c10 to point e10 in FIG. 10). Furthermore, during a normal operation, a position where a refrigerant falls into a thermodynamic equilibrium state in the second passage 322 changes by adjusting an initial velocity of a refrigerant by the initial velocity adjustment valve 50.

A mixed refrigerant of an ejection refrigerant ejected from the nozzle portion 301 and a suction refrigerant sucked from the suction port 41 also falls into a thermodynamic equilibrium state. Therefore, states of many mixed refrigerants approach point h10 in FIG. 10. Here, a thin one-dot chain line in FIG. 10 is a boost-side isentropic line indicating an entropy equivalent to that of a refrigerant immediately after flowing out of the refrigerant outlet 44 of the ejector 141. Point h10 is positioned on a boost-side isentropic line.

Then, a mixed refrigerant is isentropically boosted by an action of a shock wave generated in the diverging mixing portion 42b (from point h10 to point i10 in FIG. 10). Other operations are similar to those of the first embodiment.

Next, a high load operation will be described. In a high load operation, a flow rate of a circulating refrigerant circulating through a cycle increases, so that a velocity of a refrigerant flowing through a refrigerant passage of the nozzle portion 301 increases as compared to a normal operation. Therefore, in the second passage 322, a thermodynamic non-equilibrium state of a gas-liquid two-phase refrigerant generated in the first passage 321 or the first outlet 32b of the nozzle portion 301 cannot be eliminated. As a result, a refrigerant in a thermodynamic non-equilibrium state is ejected from the ejection port 32e.

Therefore, during a high load operation, as shown in a Mollier diagram of FIG. 11, a refrigerant having fallen into a thermodynamic non-equilibrium state in the first passage 321 or the first outlet 32b of the nozzle portion 301 (point c11 in FIG. 11) is ejected while deviating from an inlet-side isentropic line (from point c11 to point e11 in FIG. 11).

In a mixed refrigerant of an ejection refrigerant and a suction refrigerant in a thermodynamic non-equilibrium state, a thermodynamic non-equilibrium state is not eliminated. Therefore, states of many mixed refrigerants approach point h11 in FIG. 11. Point h11 is positioned on a side having a higher enthalpy than a boost-side isentropic line.

On the other hand, in the ejector 141 of the present embodiment, a passage cross-sectional area of the mixing portion 42 is changed so that a thermodynamic non-equilibrium state of a mixed refrigerant can be eliminated in the mixing portion 42 during a high load operation. Therefore, a mixed refrigerant of a suction refrigerant and an ejection refrigerant accelerated in the converging mixing portion 42a approaches a boost-side isentropic line.

Then, a mixed refrigerant is isentropically boosted by an action of a shock wave generated in the diverging mixing portion 42b (from point h11 to point i11 in FIG. 11). Other operations are similar to those in a normal operation.

As described above, in the vehicular refrigeration cycle device 1 of the present embodiment, the battery 80 may be cooled similarly to the first embodiment. Furthermore, in the ejector-type refrigeration cycle 10 of the present embodiment, since the ejector 141 is provided, even if a load fluctuation occurs when a heat generation amount of the battery 80 changes or the like, a sufficiently high COP is exhibited regardless of a load fluctuation.

More specifically, in the ejector 141 of the present embodiment, even if a refrigerant is in a thermodynamic non-equilibrium state in the first passage 321, it may fall into a thermodynamic equilibrium state in any one of the second passage 322 and the mixing portion 42. Therefore, in any one of the second passage 322 and the mixing portion 42, a pressure energy possessed by a refrigerant flowing into the nozzle portion 301 may be effectively converted into a kinetic energy in the ejector 141.

Furthermore, even if a pressure, a temperature, or a flow rate of a refrigerant flowing into the nozzle portion 301 changes, a flow rate of a refrigerant flowing through the nozzle passage 32 may be adjusted by changing a position where a refrigerant reaches a critical state in the second passage 322. Therefore, it is not necessary to change a passage cross-sectional area of the first outlet 32b in order to change a flow rate of a fluid flowing through the nozzle passage 32.

As a result, in the ejector 141 of the present embodiment, a pressure boosting capacity of the ejector 141 may be improved regardless of a flow rate fluctuation of a refrigerant flowing into the nozzle portion 301.

Further, in the present embodiment, a method for operating a nozzle device capable of improving the nozzle efficiency ηnoz regardless of a flow rate fluctuation of an inflowing fluid during a normal operation is disclosed.

That is, as a method for operating a nozzle device constituted by the nozzle portion 301 and the initial velocity adjustment valve 50, a method for operating is disclosed in which, during a normal operation, a fluid in a gas-liquid two-phase having fallen into a thermodynamic non-equilibrium state in the first passage 321 is brought to a critical state and to a thermodynamic equilibrium state in the second passage 322. Furthermore, a position where a fluid becomes a thermodynamic equilibrium state in the second passage 322 is changed by adjusting a velocity of a fluid flowing into the nozzle inlet 32a.

According to this, even if a fluid flowing out from the first outlet 32b is in a thermodynamic non-equilibrium state, a fluid is brought to a critical state and to a thermodynamic equilibrium state in the second passage 322. Therefore, at an outlet of the second passage 322, a pressure energy possessed by a fluid flowing into the nozzle portion inlet 32a may be effectively converted into a velocity energy, and a velocity of an ejection fluid may be increased. As a result, the nozzle efficiency ηnoz may be improved.

Furthermore, since a position where a fluid becomes a thermodynamic equilibrium state in the second passage 322 is changed by adjusting a velocity of a fluid flowing into the nozzle inlet 32a, a velocity and a density bringing a fluid to a critical state are changed, and a critical flow rate of a fluid may be changed. That is, it is not necessary to change a passage cross-sectional area of the first outlet 32b in order to change a flow rate of a fluid flowing through the nozzle passage 32.

Therefore, even if a flow rate fluctuation of a fluid flowing into the nozzle portion 301 occurs, a generation mode and a generation amount of bubbles generated in a liquid-phase fluid in a vicinity of a wall surface of the first outlet 32b are less likely to be affected. As a result, regardless of a flow rate fluctuation of an inflowing fluid, sufficient bubbles may be generated in a liquid-phase fluid, and a velocity of an ejection fluid may be increased. That is, the nozzle efficiency ηnoz may be improved regardless of a flow rate fluctuation of an inflowing fluid.

Further, a nozzle device of the present embodiment includes the initial velocity adjustment valve 50. According to this, a critical flow rate of a fluid in the second passage 322 may be easily changed.

### (Third Embodiment)

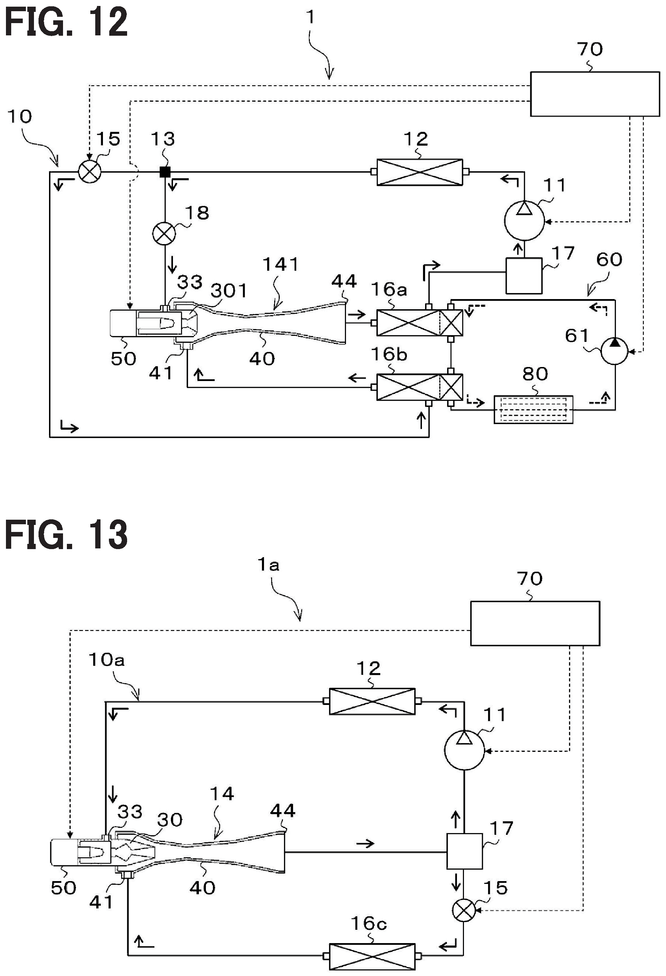

In the present embodiment, as shown in an overall configuration diagram of FIG. 12, an example in which a pressure adjustment valve 18 is added to the ejector-type refrigeration cycle 10 described in the second embodiment will be described. The pressure adjustment valve 18 is a pressure adjustment portion configured to adjust a pressure of a refrigerant flowing into the nozzle inlet 32a. A basic configuration of the pressure adjustment valve 18 is similar to that of the electric expansion valve 15. Other configurations of the vehicular refrigeration cycle device 1 are similar to those of the second embodiment.

Further, in the vehicular refrigeration cycle device 1 of the present embodiment, when a control program determines that cooling of the battery 80 is required, the control device 70 controls an operation of the pressure adjustment valve 18 such that an inlet pressure Pni of a refrigerant flowing into the nozzle inlet 32a approaches a predetermined reference inlet pressure KPni. Other control target devices are controlled in the same manner as in the second embodiment.

Therefore, the ejector-type refrigeration cycle 10 of the present embodiment operates similarly to the second embodiment, and an effect similar to that of the second embodiment may be obtained. That is, since the ejector 141 is provided, even if a load fluctuation occurs, a sufficiently high COP is exhibited regardless of a load fluctuation.

Furthermore, since the ejector-type refrigeration cycle 10 of the present embodiment includes the pressure adjustment valve 18, the inlet pressure Pni may be brought close to the reference inlet pressure KPni. According to this, since the inlet pressure Pni may be stabilized, a critical flow rate of a refrigerant in the second passage 322 may be accurately adjusted by the initial velocity adjustment valve 50. Similarly, according to a method for operating a nozzle device of the present embodiment, a critical flow rate of a refrigerant in the second passage 322 may be accurately adjusted.

### (Fourth Embodiment)

In the present embodiment, an example in which the ejector 14 is applied to an ejector-type refrigeration cycle 10a shown in an overall configuration diagram of FIG. 13 will be described. In the present embodiment, the ejector-type refrigeration cycle 10a is applied to a vehicular air conditioning device 1a.

In the ejector-type refrigeration cycle 10a, a refrigerant inlet side of the outdoor heat exchanger 12 is connected to a discharge port of the compressor 11. The refrigerant inlet 33 side of the ejector 14 is connected to a refrigerant outlet of the outdoor heat exchanger 12. An inlet side of the accumulator 17 is connected to the refrigerant outlet 44 of the ejector 14. A suction port side of the compressor 11 is connected to a gas-phase refrigerant outlet of the accumulator 17.

An inlet side of the electric expansion valve 15 is connected to a liquid-phase refrigerant outlet of the accumulator 17. A refrigerant inlet side of an indoor evaporator 16c is connected to an outlet of the electric expansion valve 15. The indoor evaporator 16c exchanges heat between a refrigerant and a blown air blown into a vehicle interior which is an air-conditioned space. The indoor evaporator 16c is an evaporation portion configured to cause a refrigerant flowing out of the ejector 14 to absorb heat possessed by a blown air and evaporate a refrigerant.

The suction port 41 side of the ejector 14 is connected to a refrigerant outlet of the indoor evaporator 16c. In the present embodiment, R1234yf is employed as a refrigerant of the ejector-type refrigeration cycle 10a, similarly to the first embodiment. Other basic configurations of the vehicular air conditioning device 1a are similar to those of the vehicular refrigeration cycle device 1 described in the first embodiment.

Next, an operation of the vehicular air conditioning device 1a of the present embodiment having the above configuration will be described. The control device 70 executes an air conditioning control program stored in the ROM when an air conditioning switch is turned on in a state where a start switch of a vehicle system is turned on.

When an air conditioning control program is executed, the control device 70 controls operations of various constituent devices of the ejector-type refrigeration cycle 10a to cool a blown air. Specifically, the control device 70 controls a rotation speed of the compressor 11 such that a refrigerant evaporation temperature in the indoor evaporator 16c approaches a target evaporation temperature TEO.

A target evaporation temperature TEO is determined based on a target blowing temperature TAO of a blown air blown into a vehicle interior. A target blowing temperature TAO is calculated using an outside air temperature, an inside air temperature, an amount of solar radiation, a set temperature of a vehicle interior set by an occupant, and the like.

Further, the control device 70 controls a throttle opening degree of the electric expansion valve 15 such that a superheating degree SH1 of a refrigerant flowing out of the indoor evaporator 16c approaches a predetermined reference superheating degree KSH1. Further, the control device 70 controls an operation of the initial velocity adjustment valve 50 such that a refrigerant flowing into the nozzle passage 32 reaches a critical state in the second passage 322.

Therefore, in the ejector-type refrigeration cycle 10a, a refrigerant discharged from the compressor 11 flows into the outdoor heat exchanger 12. In the outdoor heat exchanger 12, a refrigerant releases heat to an outside air and condenses. A refrigerant flowing out of the outdoor heat exchanger 12 becomes a drive-side fluid and flows into the refrigerant inlet 33 of the ejector 14.

In the ejector 14, similarly to the first embodiment, a mixed refrigerant of an ejection refrigerant ejected from the nozzle portion 30 and a suction refrigerant sucked from the suction port 41 is boosted by an action of a shock wave and flows out from the refrigerant outlet 44. A refrigerant flowing out of a refrigerant outlet of the ejector 14 flows into the accumulator 17 and is separated into gas and liquid.

A liquid-phase refrigerant separated by the accumulator 17 flows into the electric expansion valve 15 and is depressurized. A refrigerant depressurized by the electric expansion valve 15 flows into the indoor evaporator 16c. In the indoor evaporator 16c, a refrigerant depressurized by the electric expansion valve 15 absorbs heat from a blown air and evaporates. Thus, a blown air blown into a vehicle interior is cooled.

The indoor evaporator 16c is sucked from the suction port 41 of the ejector 14. Therefore, in the ejector 14 of the present embodiment, a refrigerant flowing out of the indoor evaporator 16c becomes a suction-side fluid. A gas-phase refrigerant separated in the accumulator 17 is sucked into the compressor 11 and compressed again.

As described above, in the vehicular air conditioning device 1a of the present embodiment, a blown air blown into a vehicle interior may be cooled. Furthermore, in the ejector-type refrigeration cycle 10a of the present embodiment, an effect similar to that of the first embodiment may be obtained.

That is, in the ejector 14 of the present embodiment, a high pressure boosting capacity may be exhibited regardless of a flow rate fluctuation of a refrigerant flowing into the nozzle portion 30. Then, since the ejector-type refrigeration cycle 10a includes the ejector 14, a sufficiently high COP may be exhibited regardless of a load fluctuation.

### (Fifth Embodiment)

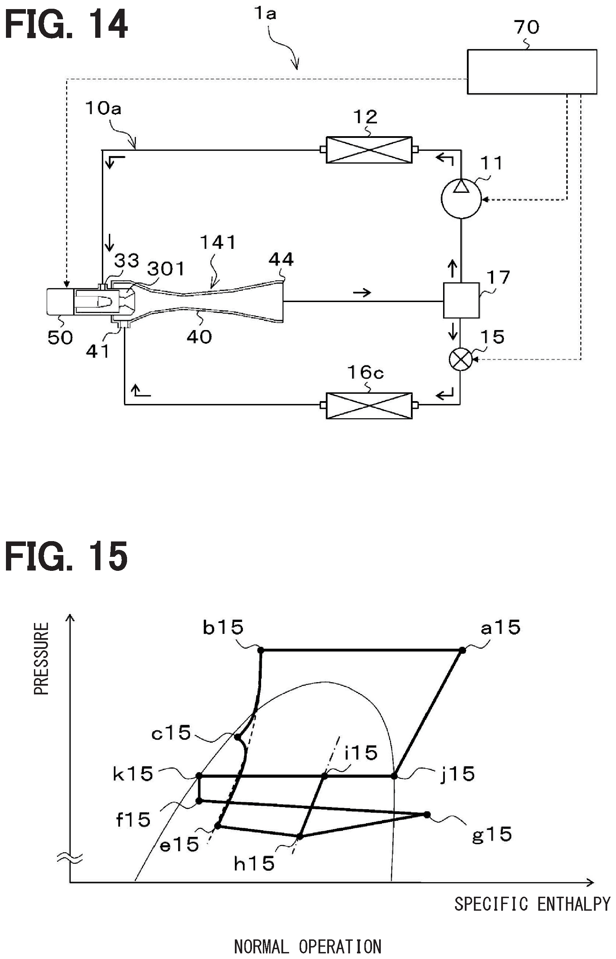

In the present embodiment, as shown in an overall configuration diagram of FIG. 14, an example in which the ejector-type refrigeration cycle 10a including the ejector 141 described in the second embodiment is applied to a vehicular air conditioning device 1a will be described.

In the present embodiment, R744 is employed as a refrigerant of the ejector-type refrigeration cycle 10a, similarly to the second embodiment. Therefore, the ejector-type refrigeration cycle 10a of the present embodiment constitutes a supercritical refrigeration cycle. Other configurations of the vehicular air conditioning device 1a are similar to those of the third embodiment.

Next, an operation of the vehicular air conditioning device 1a of the present embodiment having the above configuration will be described. A basic operation of the vehicular air conditioning device 1a of the present embodiment is similar to that of the fourth embodiment. Furthermore, in the ejector-type refrigeration cycle 10a of the present embodiment, similarly to the second embodiment, a change in a state of a refrigerant during a normal operation is different from a state of a refrigerant during a high load operation.

First, during a normal operation, as shown in a Mollier diagram of FIG. 15, a refrigerant in a supercritical state (point a15 in FIG. 15) discharged from the compressor 11 flows into the outdoor heat exchanger 12. A refrigerant flowing into the outdoor heat exchanger 12 releases heat to an outside air to lower an enthalpy (from point a15 to point b15 in FIG. 15). A refrigerant flowing out of the outdoor heat exchanger 12 flows into the refrigerant inlet 33 of the ejector 141.

A refrigerant flowing into the initial velocity adjustment space 31 through the refrigerant inlet 33 of the ejector 141 flows into the nozzle passage 32 after its initial velocity is adjusted by the initial velocity adjustment valve 50. A refrigerant flowing into the nozzle passage 32 is depressurized in the first passage 321 and becomes a gas-liquid two-phase refrigerant in a thermodynamic non-equilibrium state (from point b15 to point c15 in FIG. 15). Then, it reaches a critical state at the first outlet 32b or in the second passage 322.

In a refrigerant having fallen into a thermodynamic non-equilibrium state, a thermodynamic non-equilibrium state is eliminated in the second passage 322, similarly to the second embodiment. Therefore, an ejection refrigerant ejected from the ejection port 32e approaches an inlet-side isentropic line (from point c15 to point e15 in FIG. 15). Most of a mixed refrigerant of an ejection refrigerant ejected from the nozzle portion 301 and a suction refrigerant sucked from the suction port 41 approaches point h15 in FIG. 15, similarly to the second embodiment.

Then, a mixed refrigerant is isentropically boosted by an action of a shock wave generated in the diverging mixing portion 42b (from point h15 to point i15 in FIG. 15) and flows out of the refrigerant outlet 44 of the ejector 141. A refrigerant flowing out of the refrigerant outlet 44 of the ejector 141 flows into the accumulator 17 and is separated into gas and liquid (from point i15 to point j15, and from point i15 to point k15 in FIG. 15).

A liquid-phase refrigerant flowing out from a liquid-phase refrigerant outlet of the accumulator 17 flows into the electric expansion valve 15 and is depressurized (from point k15 to point f15 in FIG. 15). A refrigerant depressurized by the electric expansion valve 15 flows into the indoor evaporator 16c. In the indoor evaporator 16c, a refrigerant flowing out of the electric expansion valve 15 absorbs heat from a blown air and evaporates (from point f15 to point g15 in FIG. 15). Thus, a blown air is cooled. A refrigerant flowing out of the indoor evaporator 16c is sucked from the suction port 41 of the ejector 141.

A gas-phase refrigerant flowing out from a gas-phase refrigerant outlet of the accumulator 17 is sucked into the compressor 11 and compressed again (from point j15 to point a15 in FIG. 15). Other operations are similar to those of the fourth embodiment.

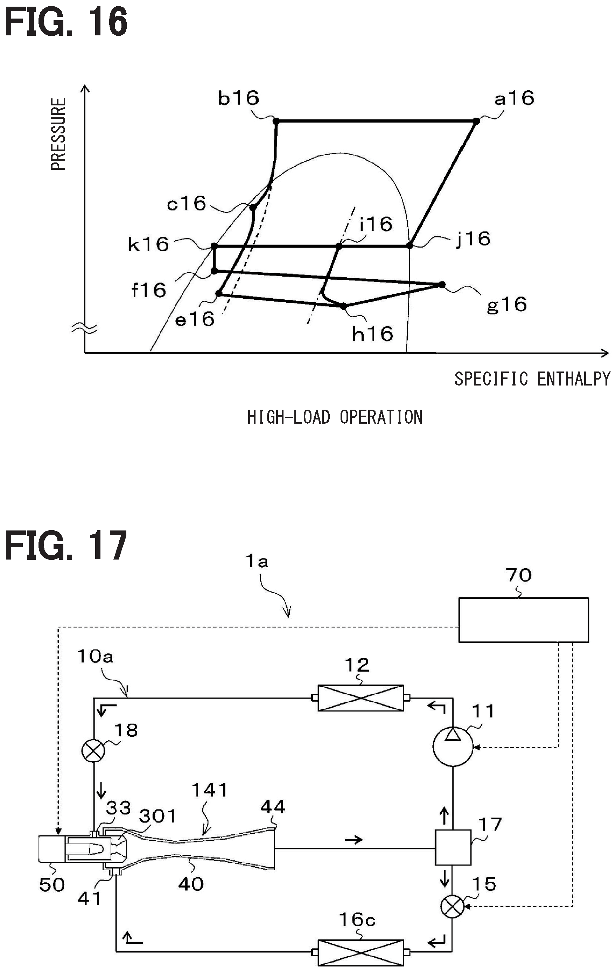

Next, a high load operation will be described. In a high load operation, as shown in a Mollier diagram of FIG. 16, a refrigerant having fallen into a thermodynamic non-equilibrium state in the first passage 321 or the first outlet 32b of the nozzle portion 301 (point c16 in FIG. 16) is ejected while deviating from an inlet-side isentropic line (from point c16 to point e16 in FIG. 16). Most of a mixed refrigerant of an ejection refrigerant and a suction refrigerant in a thermodynamic non-equilibrium state approaches point h16 in FIG. 16, similarly to the second embodiment.

A mixed refrigerant of a suction refrigerant and an ejection refrigerant accelerated in the converging mixing portion 42a approaches a boost-side isentropic line, similarly to the second embodiment. Then, a mixed refrigerant is isentropically boosted by an action of a shock wave generated in the diverging mixing portion 42b (from point h16 to point i16 in FIG. 16). Other operations are similar to those in a normal operation.

Therefore, in the vehicular air conditioning device 1a of the present embodiment, a blown air blown into a vehicle interior may be cooled, similarly to the fourth embodiment. Furthermore, since the ejector-type refrigeration cycle 10a of the present embodiment includes the ejector 141, a sufficiently high COP is exhibited regardless of a load fluctuation, similarly to the second embodiment.

### (Sixth Embodiment)

In the present embodiment, as shown in an overall configuration diagram of FIG. 17, a pressure adjustment valve 18 similar to that of the third embodiment is added to the ejector-type refrigeration cycle 10a described in the fifth embodiment. Other configurations of the vehicular air conditioning device 1a are similar to those of the fifth embodiment. Further, in the vehicular air conditioning device 1a of the present embodiment, the control device 70 controls an operation of the pressure adjustment valve 18, similarly to the third embodiment. Other control target devices are controlled in the same manner as in the fifth embodiment.

Therefore, the ejector-type refrigeration cycle 10a of the present embodiment operates similarly to the fifth embodiment, and an effect similar to that of the fifth embodiment may be obtained. That is, since the ejector 141 is provided, a sufficiently high COP is exhibited regardless of a load fluctuation.

Furthermore, the ejector-type refrigeration cycle 10a of the present embodiment includes the pressure adjustment valve 18. Therefore, similarly to the third embodiment, a critical flow rate of a refrigerant in the second passage 322 may be accurately adjusted by the initial velocity adjustment valve 50. Similarly, according to a method for operating a nozzle device of the present embodiment, a critical flow rate of a refrigerant in the second passage 322 may be accurately adjusted.

### (Other Embodiments)

The present disclosure is not limited to the above-described embodiments, and may be variously modified as follows without departing from a gist of the present disclosure.

In the above-described embodiments, an example in which an ejector according to the present disclosure is applied to an ejector-type refrigeration cycle has been described, but application of an ejector according to the present disclosure is not limited thereto. For example, it may be applied to a vacuum pump configured to bring a predetermined space close to a vacuum state by using a negative pressure generated in the suction port 41.

In the above-described embodiments, an example in which the ejector-type refrigeration cycles 10 and 10a according to the present disclosure are applied to the vehicular refrigeration cycle device 1 and the vehicular air conditioning device 1a has been described, but the present disclosure is not limited thereto. For example, it may be applied to a stationary air conditioning device, a freezing device, and a refrigerating device.

In the above-described embodiments, a heat release portion of the ejector-type refrigeration cycles 10 and 10a according to the present disclosure may be used as a heating portion configured to heat a heating target object using a discharge refrigerant discharged from the compressor 11 as a heat source. In this case, the ejector-type refrigeration cycles 10 and 10a may be applied to a heating device or a hot water supply device heating water for daily life or the like. Furthermore, the ejector-type refrigeration cycles 10 and 10a may be applied to a heating device for warming up an in-vehicle device described above.

In the above-described embodiments, an example in which a method for operating a nozzle device according to the present disclosure is applied to the nozzle portion 30 of the ejector 14 has been described, but a method for operating a nozzle device according to the present disclosure is applicable to a wide range of nozzle devices where an improvement in a nozzle efficiency is required.

A configuration of an ejector according to the present disclosure is not limited to configurations disclosed in the above-described embodiments.

For example, in the above-described embodiments, an example in which the nozzle portion 30 of the ejector 14 and the initial velocity adjustment valve 50 serving as a velocity adjustment portion are integrally formed has been described, but the nozzle portion 30 and the initial velocity adjustment valve 50 may be formed as separate bodies. Further, as the ejectors 14 and 141, an ejector not having the initial velocity adjustment valve 50 may be employed.

In the above-described embodiments, the ejector 141 in which an area ratio CAin/CAth is set to 10 or less in order to eliminate a thermodynamic non-equilibrium state in the second passage 322 has been described, but the present disclosure is not limited thereto. In order to eliminate a thermodynamic non-equilibrium state in the second passage 322, a second passage ratio L2/φD1 may be set to 3 times or more. A second passage ratio L2/φD1 is a ratio of an axial length L2 of the second passage 322 to a diameter φD1 of the first outlet 32b corresponding to a throat portion.

A configuration of an ejector-type refrigeration cycle according to the present disclosure is not limited to configurations disclosed in the above-described embodiments. For example, as long as an operation described in the above-described embodiments may be executed, it may be configured such that a refrigerant circuit may be switched according to an operation mode.

A circuit configuration of an ejector-type refrigeration cycle according to the present disclosure is not limited to circuit configurations disclosed in the above-described embodiments. In the ejector-type refrigeration cycle 10 described in the first embodiment, a degree of dryness adjustment portion may be employed instead of the branch portion 13. A degree of dryness adjustment portion is a branch portion capable of causing refrigerants having different degrees of dryness to flow out.

More specifically, a centrifugal separation type gas-liquid separator separating gas and liquid of a refrigerant by an action of a centrifugal force may be employed as a degree of dryness adjustment portion. Then, a refrigerant having a relatively high degree of dryness on a central side may flow out toward the refrigerant inlet 33 side of the ejector 14, and a refrigerant having a relatively low degree of dryness on an outer peripheral side may flow out toward the electric expansion valve 15 side.

In the ejector-type refrigeration cycle 10 described in the first embodiment, an internal heat exchanger may be disposed instead of the first chiller 16a. An internal heat exchanger is an internal heat exchange portion configured to exchange heat between a high-pressure refrigerant from a heat release portion and a refrigerant flowing out from the refrigerant outlet 44 of the ejector 14. According to this, an enthalpy of a refrigerant flowing into the second chiller 16b may be reduced, and a cooling capacity exhibited in the second chiller 16b may be increased.

In the ejector-type refrigeration cycle 10 described in the first to third embodiments, an evaporation heat exchanger (the first chiller 16a in the first embodiment) and an evaporation portion (the second chiller 16b in the first embodiment) may cool different cooling target objects.

In the ejector-type refrigeration cycle 10a described in the fourth to sixth embodiments, an evaporation heat exchanger may be connected in parallel to an evaporation portion (the indoor evaporator 16c in the fourth embodiment). Then, in an evaporation heat exchanger, a cooling target object different from a cooling target object of an evaporation portion may be cooled.

In the above-described embodiments, an example in which the outdoor heat exchanger 12 is employed as a heat release portion has been described, but the present disclosure is not limited thereto. For example, as a heat release portion, a heat medium circuit in which a heat medium pump, a water-refrigerant heat exchanger, a heat releasing heat exchanger, and the like are disposed to circulate a heat medium may be employed.

The heat medium pump is a pump configured to pump a heat medium to a water passage of a water-refrigerant heat exchanger. A basic configuration of a heat medium pump may be the same as that of the cooling water pump 61. As a heat medium, a fluid of the same type as cooling water may be employed.

The water-refrigerant heat exchanger is a heat exchanger configured to exchange heat between a high-pressure refrigerant discharged from the compressor 11 and a heat medium pumped from a heat medium pump. The heat releasing heat exchanger is a heating heat exchanger configured to exchange heat between a high-temperature side heat medium heated in a water-refrigerant heat exchanger and a target fluid to which heat is released. The target fluid to which heat is released is not limited to an outside air, and may be a heating target object such as a blown air blown into an air-conditioned space.

In the above-described embodiments, an example in which the battery 80 is employed as an in-vehicle device serving as a cooling target object of an ejector-type refrigeration cycle has been described, but a cooling target object is not limited thereto. As an in-vehicle device, temperatures of a motor generator, an inverter, a sensor processing unit, a transaxle, an ADAS control device, and the like may be adjusted.

The motor generator is an electric motor having a function as a motor outputting a driving force for traveling and a function as a generator. The inverter is an electric circuit device supplying electric power to a motor generator and the like. The sensor processing unit is a control device in which interfaces and communication functions of environmental sensors are integrated for automatic driving and energy-saving driving. The transaxle is a power transmission mechanism in which a transmission, a differential gear, and the like are integrated. The ADAS control device is a control device for an advanced driver assistance system.

In the above-described third and sixth embodiments, the ejector-type refrigeration cycles 10 and 10a including the ejectors 14 and 141 having the pressure adjustment valve 18 and the initial velocity adjustment valve 50 have been described, but the present disclosure is not limited thereto. For example, the ejectors 14 and 141 not having the initial velocity adjustment valve 50 may be employed, and the pressure adjustment valve 18 may be provided. In this case, a velocity of a refrigerant flowing into the nozzle portions 30 and 301 may be adjusted by the pressure adjustment valve 18.

Further, a control sensor group connected to an input side of the control device 70 is not limited to detection portions disclosed in the above-described embodiments. Various detection portions may be added as necessary.

In the above-described embodiments, an example in which R1234yf and R744 are employed as a refrigerant of the ejector-type refrigeration cycles 10 and 10a has been described, but the present disclosure is not limited thereto. For example, R134a, R600a, R410A, R404A, R32, R407C, R290, and the like may be employed. A mixed refrigerant in which multiple types of these refrigerants are mixed may also be employed.

In the above-described embodiments, an example in which an ethylene glycol aqueous solution is employed as cooling water has been described, but the present disclosure is not limited thereto. As a heating heat medium and a low-temperature side heat medium, for example, a solution including dimethylpolysiloxane or an nanofluid, an antifreeze liquid, an aqueous liquid refrigerant including alcohol or the like, a liquid medium including oil or the like, and the like may be employed.

A control mode of an ejector-type refrigeration cycle according to the present disclosure is not limited to control modes disclosed in the above-described embodiments.

For example, in the vehicular refrigeration cycle device 1 of the first embodiment, the control device 70 may control an operation of the initial velocity adjustment valve 50 of the ejector 14 such that a subcooling degree SC of a refrigerant flowing into the ejector 14 approaches a target subcooling degree SCO. Furthermore, the control device 70 may control a throttle opening degree of the electric expansion valve 15 such that a superheating degree SH of a suction refrigerant approaches a predetermined reference superheating degree KSH. Furthermore, as shown in FIG. 12, a throttle device may be provided upstream of the ejector 14, and a pressure of a refrigerant flowing into the first passage 321 may be adjusted by controlling its opening degree.

Characteristics of a refrigeration cycle device disclosed in the present specification are shown as follows.

### (Item 1)

An ejector includes a nozzle portion (30, 301) configured to depressurize and eject a drive-side fluid, and a body portion (40). The body portion (40) includes a suction port (41) configured to suck a suction-side fluid, a mixing portion (42) configured to mix an ejection fluid ejected from the nozzle portion and a suction fluid sucked from the suction port, and a refrigerant outlet (44) configured to cause a mixed fluid mixed in the mixing portion to flow out. The nozzle portion includes a nozzle inlet (32a) at which depressurization of a fluid is started, an ejection port (32e) from which the fluid is ejected, and a nozzle passage (32) extending from the nozzle inlet to the ejection port. The nozzle passage includes a first passage (321) configured to reduce a passage cross-sectional area from the nozzle inlet toward a downstream side in a fluid flow direction, and a second passage (322) configured to expand a passage cross-sectional area from a first outlet (32b) of the first passage toward the downstream side in the fluid flow direction. The first passage is configured to generate a bubble in the fluid in a liquid phase in the first passage. The second passage is configured to cause the fluid to reach a critical state in the second passage.

### (Item 2)

In the ejector according to item 1, the second passage is configured to cause a velocity of the fluid in the second passage to approach a momentum-frozen phase-change equilibrium sound velocity a_{fe}.

The momentum-frozen phase-change equilibrium sound velocity a_{fe} is defined by a following Math. (1).
[Math. 10] ${a}_{fe} = \frac{{xv}_{G} {v}_{G} + \left(1-x\right) {v}_{L} {v}_{L}}{{\left({xv}_{G}+\left(1-x\right){v}_{L}\right)}^{2}} \times \sqrt{- {v}^{2} \frac{\frac{{S}_{G} - {S}_{L}}{{v}_{G} - {v}_{L}}}{- \frac{{v}_{G} - {v}_{L}}{{S}_{G} - {S}_{L}} \left(x\frac{{dS}_{G}}{dT}+\left(1-x\right)\frac{{dS}_{L}}{dT}\right) + x \frac{{dv}_{G}}{dT} + \left(1-x\right) \frac{{dv}_{L}}{dT}}}$ (1)

v_{G} is a specific volume of a gas-phase fluid. v_{L} is a specific volume of a liquid-phase fluid. v is an average specific volume of a gas-liquid two-phase fluid. S_{G} is a specific entropy of a gas-phase refrigerant. S_{L} is a specific entropy of a liquid-phase refrigerant. T is a temperature of the fluid. x is an axial distance.

### (Item 3)

In the ejector according to item 1 or 2, the first passage includes a constant area portion (321b) having a constant passage cross-sectional area.

### (Item 4)

The ejector according to any one of items 1 to 3, wherein the nozzle passage includes a third passage (323) configured to reduce a passage cross-sectional area from a second outlet (32c) of the second passage toward the downstream side in the fluid flow direction, and a fourth passage (324) configured to expand a passage cross-sectional area from a third outlet (32d) of the third passage toward the downstream side in the fluid flow direction. The third passage is configured to cause the fluid to reach the critical state at the third outlet.

### (Item 5)

In the ejector according to item 4, the third passage is configured to cause a velocity of the fluid at the third outlet to approach a momentum-equilibrium phase-change equilibrium sound velocity aₑₑ.

The momentum-equilibrium phase-change equilibrium sound velocity aₑₑ is defined by a following Math. (2).
[Math. 11] ${a}_{ee} = \sqrt{- {v}^{2} \frac{\frac{{S}_{G} - {S}_{L}}{{v}_{G} - {v}_{L}}}{- \frac{{v}_{G} - {v}_{L}}{{S}_{G} - {S}_{L}} \left(x\frac{{dS}_{G}}{dT}+\left(1-x\right)\frac{{dS}_{L}}{dT}\right) + x \frac{{dv}_{G}}{dT} + \left(1-x\right) \frac{{dv}_{L}}{dT}}}$ (2)

v_{G} is a specific volume of a gas-phase fluid. v_{L} is a specific volume of a liquid-phase fluid. v is an average specific volume of a gas-liquid two-phase fluid. S_{G} is a specific entropy of a gas-phase refrigerant. S_{L} is a specific entropy of a liquid-phase refrigerant. T is a temperature of the fluid. x is an axial distance.

### (Item 6)

In the ejector according to item 4 or 5, a velocity of the fluid having reached the critical state at the third outlet is lower than a velocity of the fluid having reached the critical state in the second passage.

### (Item 7)

An ejector includes a nozzle portion (30, 301) configured to depressurize and eject a drive-side fluid, and a body portion (40). The body portion (40) includes a suction port (41) configured to suck a suction-side fluid, a mixing portion (42) configured to mix an ejection fluid ejected from the nozzle portion and a suction fluid sucked from the suction port, and a refrigerant outlet (44) configured to cause a mixed fluid mixed in the mixing portion to flow out. The nozzle portion includes a nozzle inlet (32a) at which depressurization of a fluid is started, an ejection port (32e) from which the fluid is ejected, and a nozzle passage (32) extending from the nozzle inlet to the ejection port. The nozzle passage includes a first passage (321) configured to reduce a passage cross-sectional area from the nozzle inlet toward a downstream side in a fluid flow direction, and a second passage (322) configured to expand a passage cross-sectional area from a first outlet (32b) of the first passage toward the downstream side in the fluid flow direction. The first passage is configured to cause the fluid in a gas-liquid two-phase to be in a thermodynamic non-equilibrium state at the first outlet. The second passage is configured to cause the fluid to reach a critical state in the second passage. The second passage or the mixing portion is configured to cause the fluid to be in a thermodynamic equilibrium state in the second passage or the mixing portion.

### (Item 8)

The ejector according to any one of items 1 to 7 includes a velocity adjustment portion (50) configured to adjust a velocity of the fluid flowing into the nozzle inlet without changing a passage cross-sectional area in the nozzle passage.

### (Item 9)

An ejector-type refrigeration cycle includes a compressor (11) configured to compress and discharge a refrigerant, a heat release portion (12) configured to release heat of the refrigerant discharged from the compressor, an evaporation portion (16b, 16c) configured to evaporate the refrigerant, and an ejector (14). The ejector includes a nozzle portion (30, 301) configured to depressurize and eject the refrigerant flowing out of the heat release portion (12), and a body portion (40). The body portion includes a suction port (41) configured to suck the refrigerant flowing out of the evaporation portion (16b, 16c), a mixing portion (42) configured to mix an ejection refrigerant ejected from the nozzle portion and a suction refrigerant sucked from the suction port, and a refrigerant outlet (44) configured to cause a mixed refrigerant mixed in the mixing portion to flow out to a suction port side of the compressor. The nozzle portion includes a nozzle inlet (32a) at which depressurization of the refrigerant is started, an ejection port (32e) from which the refrigerant is ejected, and a nozzle passage (32) extending from the nozzle inlet to the ejection port. The nozzle passage includes a first passage (321) configured to reduce a passage cross-sectional area from the nozzle inlet toward a downstream side in a refrigerant flow direction, and a second passage (322) configured to expand a passage cross-sectional area from a first outlet (32b) of the first passage toward the downstream side in the refrigerant flow direction. The first passage is configured to generate a bubble in the refrigerant in a liquid phase in the first passage. The second passage is configured to cause the refrigerant to reach a critical state in the second passage.

### (Item 10)

In the ejector-type refrigeration cycle according to item 9, the nozzle passage includes a third passage (323) configured to reduce a passage cross-sectional area from a second outlet (32c) of the second passage toward the downstream side in the refrigerant flow direction, and a fourth passage (324) configured to expand a passage cross-sectional area from a third outlet (32d) of the third passage toward the downstream side in the refrigerant flow direction. The third passage is configured to cause the refrigerant to reach the critical state at the third outlet.

### (Item 11)

An ejector-type refrigeration cycle includes a compressor (11) configured to compress and discharge a refrigerant, a heat release portion (12) configured to release heat of the refrigerant discharged from the compressor, an evaporation portion (16b, 16c) configured to evaporate the refrigerant, and an ejector (14). The ejector includes a nozzle portion (30, 301) configured to depressurize and eject the refrigerant flowing out of the heat release portion (12), and a body portion (40). The body portion includes a suction port (41) configured to suck the refrigerant flowing out of the evaporation portion (16b, 16c), a mixing portion (42) configured to mix an ejection refrigerant ejected from the nozzle portion and a suction refrigerant sucked from the suction port, and a refrigerant outlet (44) configured to cause a mixed refrigerant mixed in the mixing portion to flow out to a suction port side of the compressor. The nozzle portion includes a nozzle inlet (32a) at which depressurization of the refrigerant is started, an ejection port (32e) from which the refrigerant is ejected to the body portion, and a nozzle passage (32) extending from the nozzle inlet to the ejection port. The nozzle passage includes a first passage (321) configured to reduce a passage cross-sectional area from the nozzle inlet toward a downstream side in a refrigerant flow direction, and a second passage (322) configured to expand a passage cross-sectional area from a first outlet (32b) of the first passage toward the downstream side in the refrigerant flow direction. The first passage is configured to cause the refrigerant in a gas-liquid two-phase to be in a thermodynamic non-equilibrium state at the first outlet. The second passage is configured to cause the refrigerant to reach a critical state in the second passage. The second passage or the mixing portion is configured to cause the refrigerant to be in a thermodynamic equilibrium state in the second passage or the mixing portion.

### (Item 12)

The ejector-type refrigeration cycle according to any one of items 9 to 11 includes a velocity adjustment portion (50) configured to adjust a velocity of the refrigerant flowing into the nozzle inlet without changing a passage cross-sectional area in the nozzle passage.

### (Item 13)

The ejector-type refrigeration cycle according to any one of items 9 to 12 includes a pressure adjustment portion (18) configured to adjust a pressure of the refrigerant flowing into the nozzle inlet.

### (Item 14)

A method for operating a nozzle device including a nozzle portion (30, 301) configured to depressurize a fluid. The nozzle portion includes a nozzle inlet (32a) at which depressurization of the fluid is started, an ejection port (32e) from which the fluid is ejected, and a nozzle passage (32) extending from the nozzle inlet to the ejection port. The nozzle passage including a first passage (321) configured to reduce a passage cross-sectional area from the nozzle inlet toward a downstream side in a fluid flow direction, and a second passage (322) configured to expand a passage cross-sectional area from a first outlet (32b) of the first passage toward the downstream side in the fluid flow direction. In the method, a bubble is generated in the fluid in a liquid phase in the first passage. The fluid is brought to a critical state in the second passage. A position where the fluid becomes the critical state in the second passage is changed by adjusting a velocity of the fluid flowing into the nozzle inlet.

### (Item 15)

In the method according to item 14, the nozzle passage includes a third passage (323) configured to reduce a passage cross-sectional area from a second outlet (32c) of the second passage toward the downstream side in the fluid flow direction, and a fourth passage (324) configured to expand a passage cross-sectional area from a third outlet (32d) of the third passage toward the downstream side in the fluid flow direction. In the method, the fluid is brought to the critical state at the third outlet.

### (Item 16)

A method for operating a nozzle device including a nozzle portion (30, 301) configured to depressurize a fluid. The nozzle portion includes a nozzle inlet (32a) at which depressurization of the fluid is started, an ejection port (32e) from which the fluid is ejected and a nozzle passage (32) extending from the nozzle inlet to the ejection port. The nozzle passage includes a first passage (321) configured to reduce a passage cross-sectional area from the nozzle inlet toward a downstream side in a fluid flow direction, and a second passage (322) configured to expand a passage cross-sectional area from a first outlet (32b) of the first passage toward the downstream side in the fluid flow direction. In the method, the fluid in a gas-liquid two-phase in a thermodynamic non-equilibrium state in the first passage is brought to a critical state and to a thermodynamic equilibrium state in the second passage. A position where the fluid becomes the thermodynamic equilibrium state in the second passage is changed by adjusting a velocity of the fluid flowing into the nozzle inlet.

### (Item 17)

In the method according to any one of items 14 to 16, the nozzle device includes a velocity adjustment portion (50) configured to adjust the velocity of the fluid flowing into the nozzle inlet without changing a passage cross-sectional area in the nozzle passage.

### (Item 18)

In the method according to any one of items 14 to 17, The nozzle device includes a pressure adjustment portion (18) configured to adjust a pressure of the fluid flowing into the nozzle inlet.

Although the present disclosure has been described in accordance with the embodiments, it is understood that the present disclosure is not limited to such embodiments or structures. The present disclosure also encompasses various modifications and variations within the scope of equivalents. In addition, various combinations and forms, and other combinations and forms including only one element, more, or less, are also within the scope and spirit of the present disclosure.

## Claims

1. An ejector comprising:
a nozzle portion (30, 301) configured to depressurize and eject a drive-side fluid; and
a body portion (40), wherein
the body portion (40) includes a suction port (41) configured to suck a suction-side fluid, a mixing portion (42) configured to mix an ejection fluid ejected from the nozzle portion and a suction fluid sucked from the suction port, and a refrigerant outlet (44) configured to cause a mixed fluid mixed in the mixing portion to flow out,
the nozzle portion includes a nozzle inlet (32a) at which depressurization of a fluid is started, an ejection port (32e) from which the fluid is ejected, and a nozzle passage (32) extending from the nozzle inlet to the ejection port,
the nozzle passage includes a first passage (321) configured to reduce a passage cross-sectional area from the nozzle inlet toward a downstream side in a fluid flow direction, and a second passage (322) configured to expand a passage cross-sectional area from a first outlet (32b) of the first passage toward the downstream side in the fluid flow direction,
the first passage is configured to generate a bubble in the fluid in a liquid phase in the first passage, and
the second passage is configured to cause the fluid to reach a critical state in the second passage.

2. The ejector according to claim 1, wherein
the second passage is configured to cause a velocity of the fluid in the second passage to approach a momentum-frozen phase-change equilibrium sound velocity a_{fe} defined by a following Math. (1): ${a}_{fe} = \frac{{xv}_{G} {v}_{G} + \left(1-x\right) {v}_{L} {v}_{L}}{{\left({xv}_{G}+\left(1-x\right){v}_{L}\right)}^{2}} \times \sqrt{- {v}^{2} \frac{\frac{{S}_{G} - {S}_{L}}{{v}_{G} - {v}_{L}}}{- \frac{{v}_{G} - {v}_{L}}{{S}_{G} - {S}_{L}} \left(x\frac{{dS}_{G}}{dT}+\left(1-x\right)\frac{{dS}_{L}}{dT}\right) + x \frac{{dv}_{G}}{dT} + \left(1-x\right) \frac{{dv}_{L}}{dT}}}$ (1)
where v_{G} is a specific volume of a gas-phase fluid,
v_{L} is a specific volume of a liquid-phase fluid,
v is an average specific volume of a gas-liquid two-phase fluid,
S_{G} is a specific entropy of a gas-phase refrigerant,
S_{L} is a specific entropy of a liquid-phase refrigerant,
T is a temperature of the fluid, and
x is an axial distance.

3. The ejector according to claim 1, wherein
the first passage includes a constant area portion (321b) having a constant passage cross-sectional area.

4. The ejector according to claim 1, wherein
the nozzle passage includes a third passage (323) configured to reduce a passage cross-sectional area from a second outlet (32c) of the second passage toward the downstream side in the fluid flow direction, and a fourth passage (324) configured to expand a passage cross-sectional area from a third outlet (32d) of the third passage toward the downstream side in the fluid flow direction, and
the third passage is configured to cause the fluid to reach the critical state at the third outlet.

5. The ejector according to claim 4, wherein
the third passage is configured to cause a velocity of the fluid at the third outlet to approach a momentum-equilibrium phase-change equilibrium sound velocity aₑₑ defined by a following Math. (2): ${a}_{ee} = \sqrt{- {v}^{2} \frac{\frac{{S}_{G} - {S}_{L}}{{v}_{G} - {v}_{L}}}{- \frac{{v}_{G} - {v}_{L}}{{S}_{G} - {S}_{L}} \left(x\frac{{dS}_{G}}{dT}+\left(1-x\right)\frac{{dS}_{L}}{dT}\right) + x \frac{{dv}_{G}}{dT} + \left(1-x\right) \frac{{dv}_{L}}{dT}}}$ (2)
where v_{G} is a specific volume of the gas-phase fluid,
v_{L} is a specific volume of a liquid-phase fluid,
v is the average specific volume of a gas-liquid two-phase fluid,
S_{G} is the specific entropy of a gas-phase refrigerant,
S_{L} is the specific entropy of a liquid-phase refrigerant,
T is the temperature of the fluid, and
x is the axial distance.

6. The ejector according to claim 4, wherein
a velocity of the fluid having reached the critical state at the third outlet is lower than a velocity of the fluid having reached the critical state in the second passage.

7. An ejector comprising:
a nozzle portion (30, 301) configured to depressurize and eject a drive-side fluid; and
a body portion (40), wherein
the body portion (40) includes a suction port (41) configured to suck a suction-side fluid, a mixing portion (42) configured to mix an ejection fluid ejected from the nozzle portion and a suction fluid sucked from the suction port, and a refrigerant outlet (44) configured to cause a mixed fluid mixed in the mixing portion to flow out,
the nozzle portion includes a nozzle inlet (32a) at which depressurization of a fluid is started, an ejection port (32e) from which the fluid is ejected, and a nozzle passage (32) extending from the nozzle inlet to the ejection port,
the nozzle passage includes a first passage (321) configured to reduce a passage cross-sectional area from the nozzle inlet toward a downstream side in a fluid flow direction, and a second passage (322) configured to expand a passage cross-sectional area from a first outlet (32b) of the first passage toward the downstream side in the fluid flow direction,
the first passage is configured to cause the fluid in a gas-liquid two-phase to be in a thermodynamic non-equilibrium state at the first outlet,
the second passage is configured to cause the fluid to reach a critical state in the second passage, and
the second passage or the mixing portion is configured to cause the fluid to be in a thermodynamic equilibrium state in the second passage or the mixing portion.

8. The ejector according to any one of claims 1 to 7, comprising:
a velocity adjustment portion (50) configured to adjust a velocity of the fluid flowing into the nozzle inlet without changing a passage cross-sectional area in the nozzle passage.

9. An ejector-type refrigeration cycle comprising:
a compressor (11) configured to compress and discharge a refrigerant;
a heat release portion (12) configured to release heat of the refrigerant discharged from the compressor;
an evaporation portion (16b, 16c) configured to evaporate the refrigerant; and
an ejector (14) including
a nozzle portion (30, 301) configured to depressurize and eject the refrigerant flowing out of the heat release portion (12), and
a body portion (40) including a suction port (41) configured to suck the refrigerant flowing out of the evaporation portion (16b, 16c), a mixing portion (42) configured to mix an ejection refrigerant ejected from the nozzle portion and a suction refrigerant sucked from the suction port, and a refrigerant outlet (44) configured to cause a mixed refrigerant mixed in the mixing portion to flow out to a suction port side of the compressor, wherein
the nozzle portion includes a nozzle inlet (32a) at which depressurization of the refrigerant is started, an ejection port (32e) from which the refrigerant is ejected, and a nozzle passage (32) extending from the nozzle inlet to the ejection port,
the nozzle passage includes a first passage (321) configured to reduce a passage cross-sectional area from the nozzle inlet toward a downstream side in a refrigerant flow direction, and a second passage (322) configured to expand a passage cross-sectional area from a first outlet (32b) of the first passage toward the downstream side in the refrigerant flow direction,
the first passage is configured to generate a bubble in the refrigerant in a liquid phase in the first passage, and
the second passage is configured to cause the refrigerant to reach a critical state in the second passage.

10. The ejector-type refrigeration cycle according to claim 9, wherein
the nozzle passage includes a third passage (323) configured to reduce a passage cross-sectional area from a second outlet (32c) of the second passage toward the downstream side in the refrigerant flow direction, and a fourth passage (324) configured to expand a passage cross-sectional area from a third outlet (32d) of the third passage toward the downstream side in the refrigerant flow direction, and
the third passage is configured to cause the refrigerant to reach the critical state at the third outlet.

11. An ejector-type refrigeration cycle comprising:
a compressor (11) configured to compress and discharge a refrigerant;
a heat release portion (12) configured to release heat of the refrigerant discharged from the compressor;
an evaporation portion (16b, 16c) configured to evaporate the refrigerant; and
an ejector (14) including
a nozzle portion (30, 301) configured to depressurize and eject the refrigerant flowing out of the heat release portion (12), and
a body portion (40) including a suction port (41) configured to suck the refrigerant flowing out of the evaporation portion (16b, 16c), a mixing portion (42) configured to mix an ejection refrigerant ejected from the nozzle portion and a suction refrigerant sucked from the suction port, and a refrigerant outlet (44) configured to cause a mixed refrigerant mixed in the mixing portion to flow out to a suction port side of the compressor, wherein
the nozzle portion includes a nozzle inlet (32a) at which depressurization of the refrigerant is started, an ejection port (32e) from which the refrigerant is ejected to the body portion, and a nozzle passage (32) extending from the nozzle inlet to the ejection port,
the nozzle passage includes a first passage (321) configured to reduce a passage cross-sectional area from the nozzle inlet toward a downstream side in a refrigerant flow direction, and a second passage (322) configured to expand a passage cross-sectional area from a first outlet (32b) of the first passage toward the downstream side in the refrigerant flow direction,
the first passage is configured to cause the refrigerant in a gas-liquid two-phase to be in a thermodynamic non-equilibrium state at the first outlet,
the second passage is configured to cause the refrigerant to reach a critical state in the second passage, and
the second passage or the mixing portion is configured to cause the refrigerant to be in a thermodynamic equilibrium state in the second passage or the mixing portion.

12. The ejector-type refrigeration cycle according to any one of claims 9 to **11,** comprising:
a velocity adjustment portion (50) configured to adjust a velocity of the refrigerant flowing into the nozzle inlet without changing a passage cross-sectional area in the nozzle passage.

13. The ejector-type refrigeration cycle according to any one of claims 9 to **11,** comprising:
a pressure adjustment portion (18) configured to adjust a pressure of the refrigerant flowing into the nozzle inlet.

14. A method for operating a nozzle device including a nozzle portion (30, 301) configured to depressurize a fluid,
the nozzle portion including a nozzle inlet (32a) at which depressurization of the fluid is started, an ejection port (32e) from which the fluid is ejected, and a nozzle passage (32) extending from the nozzle inlet to the ejection port,
the nozzle passage including a first passage (321) configured to reduce a passage cross-sectional area from the nozzle inlet toward a downstream side in a fluid flow direction, and a second passage (322) configured to expand a passage cross-sectional area from a first outlet (32b) of the first passage toward the downstream side in the fluid flow direction, the method comprising:
generating a bubble in the fluid in a liquid phase in the first passage;
bringing the fluid to a critical state in the second passage; and
changing a position where the fluid becomes the critical state in the second passage by adjusting a velocity of the fluid flowing into the nozzle inlet.

15. The method according to claim 14, wherein
the nozzle passage includes a third passage (323) configured to reduce a passage cross-sectional area from a second outlet (32c) of the second passage toward the downstream side in the fluid flow direction, and a fourth passage (324) configured to expand a passage cross-sectional area from a third outlet (32d) of the third passage toward the downstream side in the fluid flow direction, and
the method further comprising bringing the fluid to the critical state at the third outlet.

16. A method for operating a nozzle device including a nozzle portion (30, 301) configured to depressurize a fluid,
the nozzle portion including a nozzle inlet (32a) at which depressurization of the fluid is started, an ejection port (32e) from which the fluid is ejected and a nozzle passage (32) extending from the nozzle inlet to the ejection port,
the nozzle passage including a first passage (321) configured to reduce a passage cross-sectional area from the nozzle inlet toward a downstream side in a fluid flow direction, and a second passage (322) configured to expand a passage cross-sectional area from a first outlet (32b) of the first passage toward the downstream side in the fluid flow direction, the method comprising:
bringing the fluid in a gas-liquid two-phase in a thermodynamic non-equilibrium state in the first passage to a critical state and to a thermodynamic equilibrium state in the second passage; and
changing a position where the fluid becomes the thermodynamic equilibrium state in the second passage by adjusting a velocity of the fluid flowing into the nozzle inlet.

17. The method according to any one of claims 14 to 16, wherein
the nozzle device includes a velocity adjustment portion (50) configured to adjust the velocity of the fluid flowing into the nozzle inlet without changing a passage cross-sectional area in the nozzle passage.

18. The method according to any one of claims 14 to 16, wherein
the nozzle device includes a pressure adjustment portion (18) configured to adjust a pressure of the fluid flowing into the nozzle inlet.
